(19) **Europäisches Patentamt European Patent Office Office européen des brevets**

(11) **EP 4 752 522 A1**

(12) **EUROPEAN PATENT APPLICATION**
published in accordance with Art. 153(4) EPC

(43) Date of publication:
03.06.2026 Bulletin 2026/23

(51) International Patent Classification (IPC):
*G01N 3/00* [(2006.01)] *B21D 22/00* [(2006.01)]
*G01N 17/00* [(2006.01)]

(21) Application number: 24867858.3

(22) Date of filing: 25.06.2024

(52) Cooperative Patent Classification (CPC):
**B21D 22/00; G01N 3/00; G01N 17/00**

(86) International application number:
**PCT/JP2024/022943**

(87) International publication number:
**WO 2025/062772 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 22.09.2023 JP 2023156661

(71) Applicant: JFE Steel Corporation
Tokyo, 100-0011 (JP)

(72) Inventors:
• TATSUKAWA, Kouji
  Tokyo 100-0011 (JP)
• MINOTE, Toru
  Tokyo 100-0011 (JP)
• ISHIWATARI, Akinobu
  Tokyo 100-0011 (JP)

(74) Representative: Haseltine Lake Kempner LLP
Bürkleinstrasse 10
80538 München (DE)

(54) **METHOD, DEVICE, AND PROGRAM FOR PREDICTING DELAYED FRACTURE IN PRESS-MOLDED ARTICLE, AND METHOD FOR MANUFACTURING PRESS-MOLDED ARTICLE**

(57) A method for predicting delayed fracture in a press formed part according to the present invention includes: calculating a stress distribution and a strain distribution in a press formed part (S1); calculating a stress gradient in a direction of crack propagation due to delayed fracture at a delayed fracture portion-of-concern in the press formed part (S3); setting a hydrogen concentration distribution corresponding to the strain distribution in the press formed part (S5); performing hydrogen diffusion analysis on the press formed part based on the stress distribution and the hydrogen concentration distribution to calculate a hydrogen concentration distribution after hydrogen diffusion (S7); and predicting whether delayed fracture will occur at the delayed fracture portion-of-concern based on delayed fracture determination conditions based on stress, strain, and hydrogen concentration at the stress gradient, and stress, strain, and hydrogen concentration at the delayed fracture portion-of-concern (S9).

EP 4 752 522 A1

# FIG.1

```
                    ┌─────────┐
                    │  START  │
                    └─────────┘
```

**STRESS DISTRIBUTION AND STRAIN DISTRIBUTION CALCULATION STEP**
CALCULATE STRESS DISTRIBUTION AND STRAIN DISTRIBUTION IN PRESS FORMED PART BY PRESS FORMING CAE ANALYSIS OR SPRINGBACK CAE ANALYSIS — S1

**STRESS GRADIENT CALCULATION STEP**
SPECIFY PORTION HAVING HIGH MAXIMUM PRINCIPAL STRESS IN PRESS FORMED PART AS DELAYED FRACTURE PORTION-OF-CONCERN, AND CALCULATE STRESS GRADIENT IN DIRECTION PERPENDICULAR TO MAXIMUM PRINCIPAL STRESS IN DELAYED FRACTURE PORTION-OF-CONCERN AS STRESS GRADIENT IN DIRECTION OF CRACK PROPAGATION DUE TO DELAYED FRACTURE — S3

**STRAIN AND HYDROGEN CONCENTRATION RELATIONAL EXPRESSION DERIVATION STEP**
OBTAIN RELATIONAL EXPRESSION BETWEEN STRAIN AND HYDROGEN CONCENTRATION BY HYDROGEN CHARGE TEST — S11

**HYDROGEN CONCENTRATION DISTRIBUTION SETTING STEP**
SET HYDROGEN CONCENTRATION DISTRIBUTION CORRESPONDING TO STRAIN DISTRIBUTION IN PRESS FORMED PART BASED ON RELATIONAL EXPRESSION BETWEEN STRAIN AND HYDROGEN CONCENTRATION — S5

**HYDROGEN DIFFUSION ANALYSIS STEP**
PERFORM HYDROGEN DIFFUSION ANALYSIS AND CALCULATE HYDROGEN CONCENTRATION DISTRIBUTION AFTER HYDROGEN DIFFUSION IN PRESS FORMED PART — S7

**DELAYED FRACTURE DETERMINATION CONDITION DERIVATION STEP**
PERFORM DELAYED FRACTURE TEST TO DERIVE STRESS, STRAIN, AND HYDROGEN CONCENTRATION THAT CAUSE DELAYED FRACTURE, AND STRESS GRADIENT IN DIRECTION OF CRACK PROPAGATION, AS DELAYED FRACTURE DETERMINATION CONDITIONS — S13

**DELAYED FRACTURE OCCURRENCE PREDICTION STEP**
PREDICT OCCURRENCE/NON-OCCURRENCE OF DELAYED FRACTURE AT DELAYED FRACTURE PORTION-OF-CONCERN BASED ON DELAYED FRACTURE DETERMINATION CONDITIONS BASED ON STRESS, STRAIN, AND HYDROGEN CONCENTRATION ACQUIRED IN ADVANCE AND BASED ON STRESS GRADIENT IN DIRECTION OF CRACK PROPAGATION DUE TO DELAYED FRACTURE — S9

```
                    ┌─────────┐
                    │   END   │
                    └─────────┘
```

## Description

Field

The present invention relates to a method for predicting delayed fracture in a press formed part, a device for predicting delayed fracture in a press formed part, and a program for predicting delayed fracture in a press formed part, provided to predict occurrence of delayed fracture in a press formed part that uses a high-tensile steel sheet. The present invention further relates to a method for manufacturing a press formed part, being a method for manufacturing a press formed part in which press forming conditions are decided so as to suppress delayed fracture based on a result of prediction of occurrence of delayed fracture to manufacture the press formed part. Background

In response to further tightening of environmental regulations regarding items such as carbon dioxide emission, there is a demand for weight reduction of an automotive body for the purpose of improving fuel efficiency. On the other hand, an automotive body is also required to improve collision safety. In response to these needs, application of a high-tensile steel sheet having a tensile strength of 1 GPa or more to body frame parts of automobiles is in progress. The body frame parts of automobiles are generally manufactured by press forming. However, in a press formed part using a high-tensile steel sheet having a tensile strength exceeding 980 MPa class, there is a concern about occurrence of delayed fracture due to strain and residual stress generated from the press forming step to the parts assembly step and due to hydrogen that has intruded during manufacturing or use of an automobile.

In view of this, there have been some proposed methods of evaluating delayed fracture characteristics in a high-tensile steel sheet (high-strength steel sheet) subjected to press working For example, Patent Literature 1 discloses a method in which a test piece of a high-tensile steel sheet subjected to deep drawing is placed in a hydrogen intrusion environment, and delayed fracture characteristics are evaluated according to a crack generation situation occurring in a flange portion of the test piece. Patent Literature 2 discloses a method in which hydrogen is introduced into a test piece of a steel material to which plastic strain is imparted, and hydrogen embrittlement characteristics (delayed fracture characteristics) are evaluated based on the amount of plastic strain. Patent Literature 3 discloses a method in which an amount of hydrogen corresponding to distortion of crystal grains in a metal structure of an evaluation portion selected in advance on a high-strength steel sheet part is obtained to evaluate delayed fracture characteristics at the evaluation portion. The method is described as obtaining the amount of hydrogen corresponding to the distortion of the crystal grains at the evaluation portion by using a relationship in which the amount of hydrogen contained in the steel material when the delayed fracture occurs, the residual stress, and the distortion of the crystal grains in the metal structure are associated with each other.

Citation List

Patent Literature

Patent Literature 1: JP 2019-174124 A
Patent Literature 2: JP 2020-41838 A
Patent Literature 3: JP 2011-33600 A
Patent Literature 4: JP 2017-179589 A

Non Patent Literature

Non Patent Literature 1: Akinobu ISHIWATARI, Masaki URABE, Toru INAZUMI, "Press Forming Analysis Contributing to the Expansion of High Strength Steel Sheet Applications", JFE Steel Technical Report, No. 30 (August 2012), p.19-24.

Summary

Technical Problem

The method disclosed in Patent Literature 1 evaluates the maximum residual stress at which the delayed fracture occurs in the flange portion of the test piece of the high-tensile steel sheet formed by deep drawing, and does not consider the influence of strain on the occurrence of the delayed fracture. The method disclosed in Patent Literature 2 evaluates the superiority and inferiority of the delayed fracture characteristics (hydrogen embrittlement characteristics) of the steel material based on the amount of plastic strain, and cannot consider the influence of stress distribution and hydrogen concentration distribution on the occurrence of delayed fracture in the press formed part. The method disclosed in Patent Literature 3 selects evaluation portion subjected to the evaluation of the delayed fracture characteristics in the steel sheet formed part, measures the residual stress, the distortion of the crystal grains, and the amount of hydrogen at the evaluation portion, and uses the distortion of the crystal grains, the residual stress, and the amount of hydrogen as determination conditions of occurrence of delayed fracture. However, in a large part such as a press formed part, the method needs enormous time and cost to measure the distortion of crystal grains and the amount of hydrogen in the entire press formed part.

Each method disclosed in Patent Literature 1 and Patent Literature 3 performs a delayed fracture test of an actually press-formed steel sheet, and evaluates the delayed fracture characteristics at a specific portion of the press-formed steel sheet based on the result of the delayed fracture test. For this reason, each method takes a lot of time and cost, and has difficulty in predicting a portion having a risk of occurrence of delayed fracture in a press formed part obtained by press forming or parts assembly. Therefore, it has been difficult to manufacture a press formed part under a press forming condition capable of suppressing occurrence of delayed fracture in the press formed part. In addition, it is known that strain gradient (stress gradient) has an influence on the cracking of a press formed part (see, for example, Non-Patent Literature 1). However, none of the methods disclosed in Patent Literatures 1 to 3 evaluates the influence of the strain gradient (or stress gradient) on delayed fracture.

The present invention has been made to solve the above problems, and an object of the present invention is to provide a method for predicting delayed fracture in a press formed part, a device for predicting delayed fracture in a press formed part, and a program for predicting delayed fracture in a press formed part, provided to predict a portion where delayed fracture will occur in a press formed part that uses a high-tensile steel sheet. Another object of the present invention is to provide a method for manufacturing a press formed part in which press forming conditions are decided so as to suppress occurrence of delayed fracture at a portion where delayed fracture is predicted to occur by the above method, and a press formed part is manufactured under the decided press forming conditions.

Solution to Problem

To solve the problem and achieve the object, a method for predicting delayed fracture in a press formed part according to the present invention is the method for predicting a portion where delayed fracture will occur in the press formed part of a high-tensile steel sheet. The method includes: a stress distribution and strain distribution calculation step of calculating a stress distribution and a strain distribution in the press formed part; a stress gradient calculation step of specifying a portion having a high maximum principal stress in the press formed part as a delayed fracture portion-of-concern where delayed fracture is a matter of concern from the calculated stress distribution in the press formed part, and calculating a stress gradient in a direction perpendicular to the maximum principal stress in the specified delayed fracture portion-of-concern as a stress gradient in a direction of crack propagation due to delayed fracture; a hydrogen concentration distribution setting step of setting a hydrogen concentration distribution corresponding to the strain distribution in the press formed part calculated in the stress distribution and strain distribution calculation step, based on a relational expression between strain and hydrogen concentration acquired in advance for the high-tension steel sheet; a hydrogen diffusion analysis step of performing hydrogen diffusion analysis on the press formed part based on the stress distribution calculated in the stress distribution and strain distribution calculation step and the hydrogen concentration distribution set in the hydrogen concentration distribution setting step, and calculating a hydrogen concentration distribution after hydrogen diffusion; and a delayed fracture occurrence prediction step of acquiring a delayed fracture determination condition representing a relationship between a stress, a strain, and hydrogen concentration at a stress gradient corresponding to a stress gradient in the direction of crack propagation calculated for the delayed fracture portion-of-concern and delayed fracture occurrence, and predicting whether delayed fracture will occur at the delayed fracture portion-of-concern based on the acquired delayed fracture determination condition, and stress, strain, and a hydrogen concentration after hydrogen diffusion at the delayed fracture portion-of-concern which are obtained from the stress distribution and strain distribution calculated in the stress distribution and strain distribution calculation step and the hydrogen concentration distribution after hydrogen diffusion calculated in the hydrogen diffusion analysis step.

Moreover, the delayed fracture determination condition acquired in the delayed fracture occurrence prediction step may be a condition obtained by a delayed fracture test in which a predetermined uniaxial tensile load is applied to a uniaxial tensile test piece in which a notch portion is formed in a parallel portion, and the uniaxial tensile test piece is held in a hydrogen intrusion environment in a state where a stress gradient corresponding to the stress gradient in the direction of crack propagation, calculated on the delayed fracture portion-of-concern, is imparted to the notch portion, so as to obtain a relationship between the stress, strain, and hydrogen concentration in the notch portion to which the stress gradient is imparted, and occurrence/non-occurrence of delayed fracture in the notch portion.

Moreover, the delayed fracture determination condition acquired in the delayed fracture occurrence prediction step may be a condition obtained by a delayed fracture test in which a predetermined bending load is applied to a four-point bending test piece, and the four-point bending test piece is held in a hydrogen intrusion environment in a state where a stress gradient corresponding to the stress gradient in the direction of crack propagation, calculated on the delayed fracture portion-of-concern, is imparted to a bent portion of the four-point bending test piece, so as to obtain a relationship between the stress, strain, and hydrogen concentration in the bent portion to which the stress gradient is imparted, and occurrence/non-occurrence of delayed fracture in the bent portion.

Moreover, the stress distribution and strain distribution calculation step may calculate an equivalent plastic strain distribution as the strain distribution, and the hydrogen concentration distribution setting step may acquire, in advance, a relational expression between the equivalent plastic strain and the hydrogen concentration, and may set a hydrogen concentration distribution corresponding to the equivalent plastic strain distribution based on the acquired relational expression between the equivalent plastic strain distribution and the hydrogen concentration.

Moreover, the high-tensile steel sheet may have a tensile strength of 1 GPa or more.

Moreover, a device for predicting delayed fracture in a press formed part according to the present invention is the device that predicts a portion where delayed fracture will occur in the press formed part of a high-tensile steel sheet. The device includes: a stress distribution and strain distribution calculation unit that calculates a stress distribution and a strain distribution in the press formed part; a stress gradient calculation unit that specifies a portion having a high maximum principal stress in the press formed part as a delayed fracture portion-of-concern where delayed fracture is a matter of concern from the calculated stress distribution in the press formed part, and calculates a stress gradient in a direction perpendicular to the maximum principal stress in the specified delayed fracture portion-of-concern as a stress gradient in a direction of crack propagation due to delayed fracture; a hydrogen concentration distribution setting unit that sets a hydrogen concentration distribution corresponding to the strain distribution in the press formed part calculated by the stress distribution and strain distribution calculation unit, based on a relational expression between strain and hydrogen concentration acquired in advance for the high-tension steel sheet; a hydrogen diffusion analysis unit that performs hydrogen diffusion analysis on the press formed part based on the stress distribution calculated by the stress distribution and strain distribution calculation unit and the hydrogen concentration distribution set by the hydrogen concentration distribution setting unit, and calculates a hydrogen concentration distribution after hydrogen diffusion; and a delayed fracture occurrence prediction unit that acquires a delayed fracture determination condition representing a relationship between a stress, a strain, and hydrogen concentration at a stress gradient corresponding to a stress gradient in the direction of crack propagation calculated for the delayed fracture portion-of-concern and delayed fracture occurrence, and predicts whether delayed fracture will occur at the delayed fracture portion-of-concern based on the acquired delayed fracture determination condition, and stress, strain, and a hydrogen concentration after hydrogen diffusion at the delayed fracture portion-of-concern which are obtained from the stress distribution and strain distribution calculated by the stress distribution and strain distribution calculation unit and the hydrogen concentration distribution after hydrogen diffusion calculated by the hydrogen diffusion analysis unit.

Moreover, the stress distribution and strain distribution calculation unit may calculate an equivalent plastic strain distribution as the strain distribution, and the hydrogen concentration distribution setting unit may acquire, in advance, a relational expression between the equivalent plastic strain and the hydrogen concentration, and may set a hydrogen concentration distribution corresponding to the equivalent plastic strain distribution based on the acquired relational expression between the equivalent plastic strain distribution and the hydrogen concentration.

Moreover, a program for predicting delayed fracture in a press formed part according to the present invention is the program that predicts a portion where delayed fracture will occur in the press formed part of a high-tensile steel sheet. The program causing a computer to function as units including: a stress distribution and strain distribution calculation unit that calculates a stress distribution and a strain distribution in the press formed part; a stress gradient calculation unit that specifies a portion having a high maximum principal stress in the press formed part as a delayed fracture portion-of-concern where delayed fracture is a matter of concern from the calculated stress distribution in the press formed part, and calculates a stress gradient in a direction perpendicular to the maximum principal stress in the specified delayed fracture portion-of-concern as a stress gradient in a direction of crack propagation due to delayed fracture; a hydrogen concentration distribution setting unit that sets a hydrogen concentration distribution corresponding to the strain distribution in the press formed part calculated by the stress distribution and strain distribution calculation unit, based on a relational expression between strain and hydrogen concentration acquired in advance for the high-tension steel sheet; a hydrogen diffusion analysis unit that performs hydrogen diffusion analysis on the press formed part based on the stress distribution calculated by the stress distribution and strain distribution calculation unit and the hydrogen concentration distribution set by the hydrogen concentration distribution setting unit, and calculates a hydrogen concentration distribution after hydrogen diffusion; and a delayed fracture occurrence prediction unit that acquires a delayed fracture determination condition representing a relationship between a stress, a strain, and hydrogen concentration at a stress gradient corresponding to a stress gradient in the direction of crack propagation calculated for the delayed fracture portion-of-concern and delayed fracture occurrence, and predicts whether delayed fracture will occur at the delayed fracture portion-of-concern based on the acquired delayed fracture determination condition, and stress, strain, and a hydrogen concentration after hydrogen diffusion at the delayed fracture portion-of-concern which are obtained from the stress distribution and strain distribution calculated by the stress distribution and strain distribution calculation unit and the hydrogen concentration distribution after hydrogen diffusion calculated by the hydrogen diffusion analysis unit.

Moreover, the stress distribution and strain distribution calculation unit may calculate an equivalent plastic strain distribution as the strain distribution, and the hydrogen concentration distribution setting unit may acquire, in advance, a relational expression between the equivalent plastic strain and the hydrogen concentration, and may set a hydrogen concentration distribution corresponding to the equivalent plastic strain distribution based on the acquired relational expression between the equivalent plastic strain distribution and the hydrogen concentration.

Moreover, a method for manufacturing a press formed part according to the present invention is the method for manufacturing the press formed part that uses a high-tensile steel sheet while suppressing occurrence of delayed fracture in the press formed part. The method includes: a temporary press forming condition setting step of setting a temporary press forming condition of the press formed part; a delayed fracture occurrence/non-occurrence determination step of predicting occurrence/non-occurrence of delayed fracture in the delayed fracture portion-of-concern specified for the press formed part by the method for predicting delayed fracture in the press formed part according to the present invention, based on the temporary press forming condition, and determining whether delayed fracture will occur in the press formed part based on a result of the prediction; a temporary press forming condition change step of changing the temporary press forming condition when the delayed fracture occurrence/non-occurrence determination step has determined that the delayed fracture will occur in the press formed part; a repeating step of repeatedly executing the temporary press forming condition change step and the delayed fracture occurrence/non-occurrence determination step until the delayed fracture occurrence/non-occurrence determination step decides that there is no occurrence of delayed fracture in the press formed part; a press forming condition decision step of making a decision such that in case where the delayed fracture occurrence/non-occurrence determination step has determined that there is no occurrence of delayed fracture in the press formed part, the temporary press forming condition in this case is decided as a press forming condition; and a press forming step of press forming the high-tensile steel sheet into the press formed part under the decided press forming condition.

Advantageous Effects of Invention

According to the present invention, a portion having a high maximum principal stress in the press formed part is specified from the stress distribution of the press formed part, as a delayed fracture portion-of-concern where delayed fracture is a matter of concern, making it possible to predict whether delayed fracture will occur during use of the press formed part of the high-tensile steel sheet in consideration of a stress gradient in a direction of crack propagation due to delayed fracture at the specified delayed fracture portion-of-concern. As a result, not only whether the delayed fracture will occur in the press formed part but also a portion where the delayed fracture will occur can be predicted in the design stage of the part, making it possible to take a countermeasure against the delayed fracture, such as changing the part shape, the press forming step, etc. so as not to cause the delayed fracture.

Furthermore, the present invention determines occurrence/non-occurrence of a delayed fracture in the press formed part of the high-tensile steel sheet, and decides the press forming conditions for suppressing the occurrence of delayed fracture based on the determination result. This makes it possible to shorten the period for deciding the press forming conditions capable of suppressing the occurrence of delayed fracture in the press formed part that uses a high-tensile steel sheet. Furthermore, by press forming the press formed part under the press forming conditions decided in this manner, it is possible to manufacture a press formed part having a countermeasure applied for suppressing occurrence of delayed fracture.

Brief Description of Drawings

FIG. 1 is a flowchart illustrating a flow of processing of a method for predicting delayed fracture in a press formed part according to a first embodiment of the present invention.

FIG. 2 is a diagram illustrating a result of examining a correspondence between a cracking occurrence portion and a hydrogen concentration distribution in a uniaxial tensile test piece of a high-tensile steel sheet ((a) Uniaxial tensile test piece, (b) Cracking occurrence portion, (c) Hydrogen concentration distribution).

FIG. 3 is a graph illustrating a relationship between strain and hydrogen concentration obtained by a hydrogen charging test when a dipping time is set to 30 hours, using test pieces to which strain is imparted in various deformation modes ((a) Relationship between equivalent plastic strain and hydrogen concentration, and (b) Relationship between strain mode and hydrogen concentration).

FIG. 4 is a graph illustrating a relationship between equivalent plastic strain and hydrostatic stress when a dipping time of a uniaxial tensile test piece is set to 30 hours in a constant load hydrogen charging test.

FIG. 5 is a graph illustrating a relationship between the equivalent plastic strain and stress and the occurrence of delayed fracture when the dipping time of the uniaxial tensile test piece is set to 30 hours and 20 hours in the delayed fracture test ((a) Dipping time: 30 hours, (b) Dipping time: 20 hours).

FIG. 6 is a graph illustrating a relationship between equivalent plastic strain and hydrogen concentration of a uniaxial tensile test piece measured for each of dipping times of 30 hours, 20 hours, and 10 hours in a delayed fracture test.

FIG. 7 is a graph illustrating delayed fracture determination conditions under a constant stress condition (1100 MPa, 1000 MPa, 900 MPa) obtained from a result of the delayed fracture test.

FIG. 8 is a view illustrating a uniaxial tensile test piece with a notch portion used in a delayed fracture test.

FIG. 9 is a graph illustrating a relationship between a notch R (punching radius R) of the notch portion and a stress gradient when uniaxial tensile stress is applied to a uniaxial tensile test piece with the notch portion in a delayed fracture test.

FIG. 10 is a graph illustrating a relationship between a stress gradient and a delayed fracture time obtained by a delayed fracture test in which a tensile load is applied to a uniaxial tensile test piece with a notch portion.

FIG. 11 is a diagram illustrating a delayed fracture test in which a four-point bending test piece to which a stress gradient is imparted in a sheet thickness direction by a four-point bending test is dipped in a hydrogen intrusion environment for a predetermined time.

FIG. 12 is an example of a graph illustrating a relationship between a sheet thickness and a stress gradient in a four-point bending test piece to which a stress gradient is imparted in the sheet thickness direction by a four-point bending test.

FIG. 13 is a diagram illustrating a configuration of a device for predicting delayed fracture in a press formed part and program according to the first embodiment of the present invention.

FIG. 14 is a flowchart illustrating a flow of processing of a method for manufacturing a press formed part according to a second embodiment of the present invention.

FIG. 15 is a diagram illustrating a press formed part as a delayed fracture prediction target and a manufacturing target in Implementation Examples 1 and 2 ((a) Perspective view, and (b) Cross-sectional view).

FIG. 16 is a contour diagram illustrating a stress distribution and an equivalent plastic strain distribution calculated for a press formed part in Implementation Example 1 ((a) Longitudinal direction stress distribution, (b) Equivalent plastic strain distribution).

FIG. 17 is a contour diagram illustrating a hydrogen concentration distribution before hydrogen diffusion calculated for a press formed part in Implementation Example 1 ((a) Hydrogen concentration distribution corresponding to equivalent plastic strain (Case 1), (b) Hydrogen concentration distribution corresponding to hydrostatic stress, and (c) Hydrogen concentration distribution corresponding to hydrostatic stress and equivalent plastic strain (Case 2)).

FIG. 18 is a contour diagram illustrating a hydrogen concentration distribution after hydrogen diffusion calculated for a press formed part in Implementation Example 1 ((a) Hydrogen concentration distribution corresponding to equivalent plastic strain (Case 1), (b) Hydrogen concentration distribution corresponding to hydrostatic stress and equivalent plastic strain (Case 2)).

FIG. 19 is a graph illustrating a result of predicting whether delayed fracture will occur at a delayed fracture portion-of-concern in a press formed part in Implementation Example 1 ((a) Delayed fracture portion-of-concern in press formed part, (b) Graph predicting occurrence of delayed fracture using hydrogen concentration corresponding to equivalent plastic strain, and (c) Graph predicting occurrence of delayed fracture using hydrogen concentration corresponding to hydrostatic stress and equivalent plastic strain).

FIG. 20 is a graph illustrating a result of predicting whether delayed fracture will occur in a bent portion of a press formed part in Implementation Example 2.

Description of Embodiments

<Background of invention>

In examining a method of predicting a portion where delayed fracture will occur in a press formed part of a high-tensile steel sheet, the inventors performed an examination by a delayed fracture test of a high-tensile steel sheet under uniaxial tensile stress.

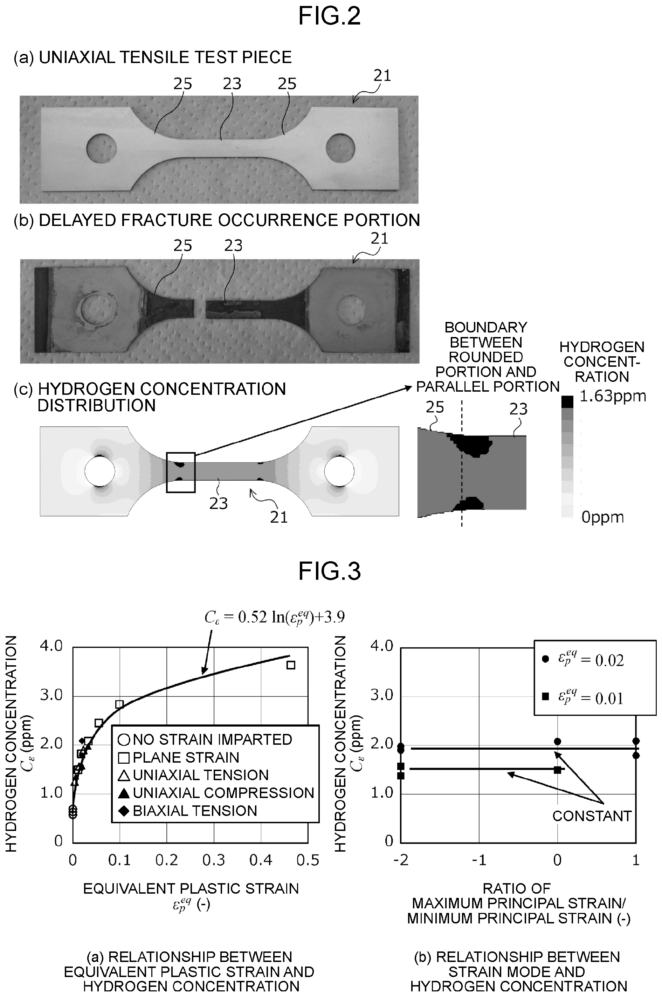

First, a hydrogen charge test was performed a on a uniaxial tensile test piece 21 using a high-tensile steel sheet as a test material illustrated in FIG. 2(a), in which the uniaxial tensile test piece 21 was placed under a hydrogen intrusion environment for a certain period of time in a state where a constant load of uniaxial tensile stress was applied, and then the amount of hydrogen in the uniaxial tensile test piece 21 was measured. Furthermore, a uniaxial tensile test in which the uniaxial tensile test piece 21 was held until cracking (delayed fracture) occurred under a hydrogen intrusion environment was performed (hereinafter, referred to as a constant load hydrogen charge test).

In a normal uniaxial tensile test in which a constant load is applied without placing the uniaxial tensile test piece 21 under the hydrogen intrusion environment, cracking occurs near the center of a parallel portion 23 in the uniaxial tensile test piece 21. However, in the uniaxial tensile test piece 21 subjected to the constant load hydrogen charge test, as illustrated in FIG. 2(b), cracking occurred not in the vicinity of the center of a parallel portion 23 but at a boundary between the parallel portion 23 and a rounded portion 25.

The inventors suspected that the hydrogen concentration distribution in the uniaxial tensile test piece 21 is related to this factor, and conducted hydrogen diffusion analysis in consideration of the hydrostatic stress distribution to investigate the correspondence between the cracking occurrence portion in the uniaxial tensile test piece 21 and the hydrogen concentration distribution after hydrogen diffusion.

FIG. 2(c) illustrates a hydrogen concentration distribution result after hydrogen diffusion obtained by a hydrogen diffusion analysis. It is found that, in the uniaxial tensile test piece 21, hydrogen is concentrated at the boundary between the rounded portion 25 and the parallel portion 23 due to the distribution of the hydrostatic stress, and a portion having a high hydrogen concentration corresponds to a cracking occurrence portion (refer to FIG. 2(b)). This result led to a conclusion that it is important to take hydrogen concentration distribution after hydrogen diffusion into consideration for prediction of delayed fracture.

Subsequently, in predicting the occurrence of delayed fracture in the press formed part, examinations have been performed on the relationship between the amount of hydrogen intruding the press formed part and the strain of the press formed part. When a high-tensile steel sheet is press-formed, there are various deformation modes in a press formed part, such as bending (plane strain), bulge forming (biaxial tension), and uniaxial tension. Accordingly, a high-tensile steel sheet (as an example, a 1470 MPa cold-rolled steel sheet having a sheet thickness of 1.2 mm) was used as a test material to prepare test pieces to which strain was imparted in various deformation modes such as rolling (plane strain), uniaxial tension, uniaxial compression, and biaxial tension/compression. Subsequently, the test piece to which the strain was imparted was placed in a hydrogen intrusion environment for a certain period of time, and then a hydrogen charge test for measuring the amount of hydrogen in the test piece was performed.

As a representative example, FIG. 3 illustrates an example of a result of a test in which a test piece to which strain is imparted in various deformation modes is dipped in a thiocyanic acid ammonium and a Mcilvaine buffer solution at a pH= 4.0 and a concentration of 0.1% for 30 hours to measure the amount of hydrogen in the test piece, with the result organized in terms of the relationship between the hydrogen concentration and the strain. FIG. 3(a) illustrates a relationship between an equivalent plastic strain $\varepsilon_p^{eq}$ imparted to the test piece and the hydrogen concentration, and FIG. 3(b) illustrates a relationship between the deformation mode when the equivalent plastic strain $\varepsilon_p^{eq}$ applied to the test piece is constant (=0.01, 0.02) and the hydrogen concentration. Regarding the correspondence between the ratio of the maximum principal strain and the minimum principal strain (hereinafter referred to as "strain ratio") in FIG. 3(b) and the deformation mode, the strain ratio of 1 represents biaxial tension, the strain ratio of 0 represents plane strain, and the strain ratio of -2 represents uniaxial tension and uniaxial compression.

Based on the results illustrated in FIG. 3, the inventors have found that the hydrogen concentration depends only on the equivalent plastic strain $\varepsilon_p^{eq}$ regardless of the deformation mode. The reason of an increase in the hydrogen concentration with an increase in the equivalent plastic strain is considered to be the increase in the equivalent plastic strain also increases defects in the test piece in which hydrogen is trapped, and a resulting increase in the amount of hydrogen intruding the steel. From the results illustrated in FIG. 3(a), the relationship between the amount of hydrogen intruding the press formed part and the strain of the press formed part is expressed as, for example, a relational expression regarding equivalent plastic strain as illustrated in Formula (1).

$$C_\varepsilon = a \cdot \ln\left(\varepsilon_p^{eq}\right) + b \qquad \cdots \ (1)$$

$C_\varepsilon$ is the hydrogen concentration (ppm) when strain is imparted, $\varepsilon_p^{eq}$ is the equivalent plastic strain, and a and b are constants.

In addition, in the constant load hydrogen charge test, repeated examinations were performed on the relationship between the amount of hydrogen intruding the press formed part and the stress distribution of the press formed part. In the uniaxial tensile test piece 21, the hydrostatic stress is generated near the boundary between the rounded portion 25 and the parallel portion 23 where the cracking occurs. The hydrostatic stress refers to an average stress defined by an average of normal stresses in three directions acting on a surface of an object. It is considered that generation of the hydrostatic stress in the tensile direction opens the crystal lattice in the steel, increasing the amount of hydrogen in the form of solid solution in the crystal lattice, leading to an increase in the amount of hydrogen intruding the steel.

Therefore, as a representative example of the constant load hydrogen charge test, a high-tensile steel sheet (as an example, a 1470 MPa-class cold-rolled steel sheet having a sheet thickness of 1.2 mm) was used as a material, and in a state where a uniaxial tensile stress (900 MPa, 600 MPa, 300 MPa, which are 300 MPa, 200 MPa, and 100 MPa in terms of hydrostatic stress) constant in the longitudinal direction of the parallel portion 23 of the uniaxial tensile test piece 21 was applied, the test piece was dipped for 30 hours in thiocyanic acid ammonium having a pH= 4.0 and a concentration of 0.1% and a McIlvaine buffer solution, and then, the amount of hydrogen in the parallel portion 23 of the uniaxial tensile test piece 21 was measured.

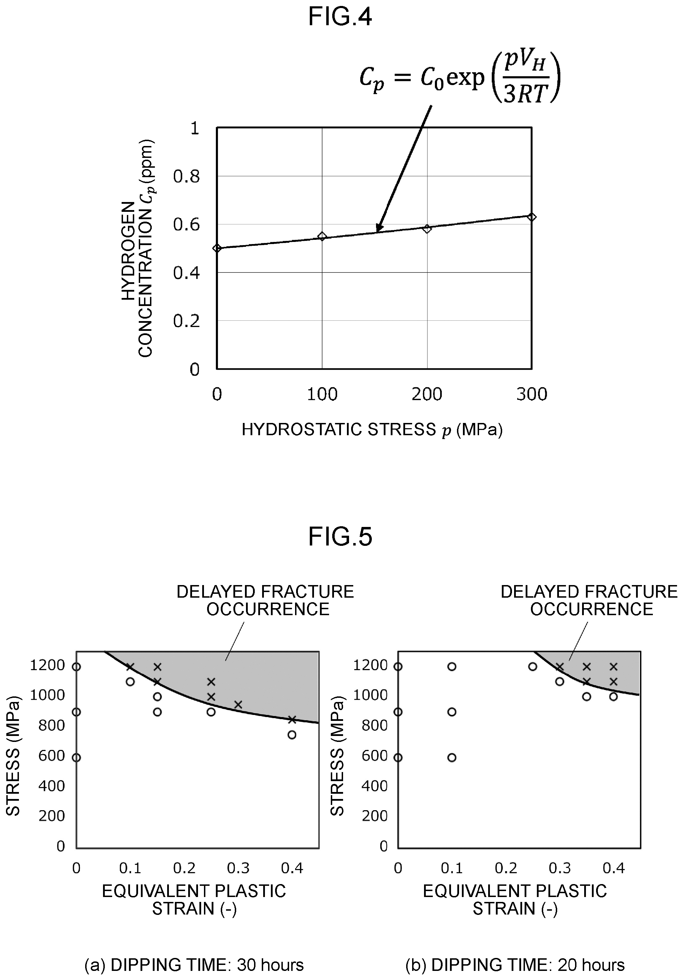

FIG. 4 illustrates the results of organizing the relationship between the hydrogen concentration and the hydrostatic stress in the uniaxial tensile test piece 21. Based on this result, the relationship between the hydrostatic stress and the amount of hydrogen (hydrogen concentration) intruding the steel is expressed by, for example, a relationship between the hydrogen concentration $C_p$ existing in the form of solid solution between crystal lattices and the tensile hydrostatic stress p as in the Formula (2). In addition, an increase amount $\Delta C_p$ of the hydrogen concentration $C_p$ when the stress is applied is expressed by Formula (3).

$$C_p = C_0 \exp\left(\frac{pV_H}{3RT}\right) \qquad \cdots (2)$$

$$\Delta C_p = C_0 \left\{ \exp\left(\frac{pV_H}{3RT}\right) - 1 \right\} \qquad \cdots (3)$$

$C_p$ is the hydrogen concentration (ppm) in a state where stress is applied, $C_0$ is the hydrogen concentration (=0.55 ppm) in a case where stress is not applied, $\Delta C_p$ is the increase amount (ppm) of the hydrogen concentration $C_p$ when stress is applied, and p is the hydrostatic stress (MPa). $V_H$ is the hydrogen molar volume change in the steel (=2.0 cm$^3$), R is the gas constant (=8.31 N·m·K-1· mol-1), and T is the temperature (=300 K).

Furthermore, as factors related to the delayed fracture of the press formed part, when environmental factors such as temperature are excluded, it is considered that the residual stress is important in addition to the amount of hydrogen and strain in the press formed part as described above. Based on this, the inventors considered that delayed fracture occurs when the hydrogen amount, strain, and stress satisfy certain conditions.

Accordingly, a test (hereinafter, referred to as a delayed fracture test) was performed in which the level of the amount of hydrogen intruding the uniaxial tensile test piece was changed in a state where a constant load of uniaxial tensile stress was applied to the uniaxial tensile test piece that uses a high-tensile steel sheet subjected to rolling strain (equivalent plastic strain) as a test material, and the occurrence/non-occurrence of cracking was evaluated.

FIG. 5 illustrates results of the delayed fracture test in which a uniaxial tensile test piece using a cold-rolled steel sheet (tensile strength: 1470 MPa grade, sheet thickness: 1.2 mm) subjected to rolling strain as a test material is dipped in thiocyanic acid ammonium having a pH= 4.0 and a concentration of 0.1% and a McIlvaine buffer solution for a predetermined time. FIG. 5 is a graph illustrating, as an example, a relationship between stress, equivalent plastic strain, and occurrence of delayed fracture when dipping times are 30 hours and 20 hours. In FIG. 5, an open circle indicates a result of plotting the equivalent plastic strain and stress of the uniaxial tensile test piece in which no delayed fracture occurred, and a cross indicates a result of plotting the equivalent plastic strain and stress of the uniaxial tensile test piece in which the delayed fracture occurred. Based on the results of the delayed fracture test, a delayed fracture determination condition given by the relationship between the equivalent plastic strain and the stress illustrated in FIG. 5 was derived. In FIG. 5, a region (shaded region in the drawing) in which the equivalent plastic strain and the stress are higher than the delayed fracture determination condition indicates a region in which delayed fracture occurs in the uniaxial tensile test piece. Based on the fact that the cracking occurred at lower stress and lower equivalent plastic strain in the dipping time of 30 hours as compared with the dipping time of 20 hours in the results illustrated in FIG. 5, it can be seen that the delayed fracture determination conditions are different depending on the length of the dipping time.

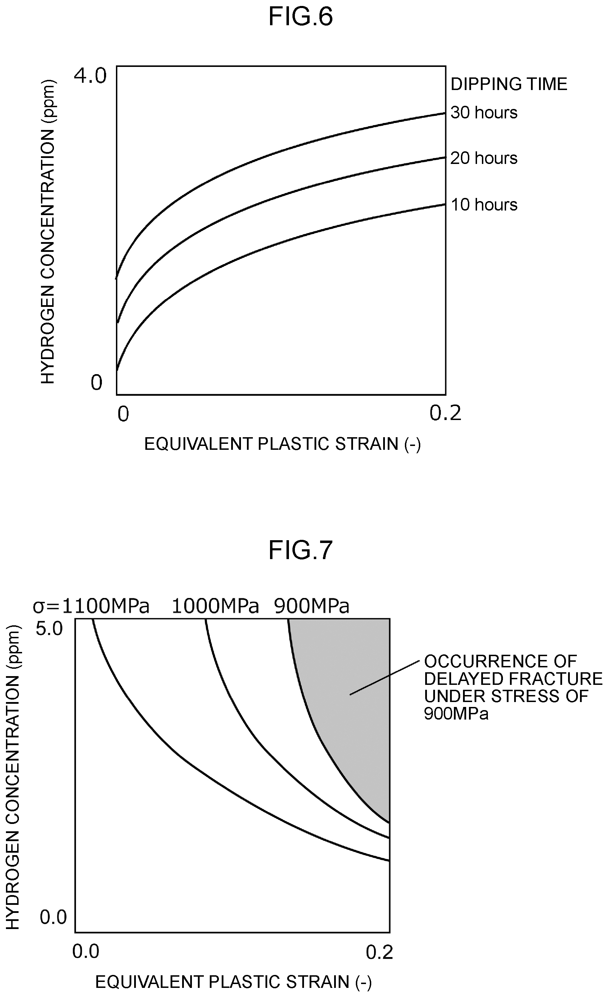

FIG. 6 illustrates the relationship between the hydrogen concentration and the equivalent plastic strain when uniaxial tensile test pieces to which various equivalent plastic strains were imparted were dipped in thiocyanic acid ammonium having a pH= 4.0 and a concentration of 0.1% and a McIlvaine buffer solution for a predetermined time (30 hours, 20 hours, and 10 hours) to measure the amount of hydrogen. As illustrated in FIG. 6, under the same stress and strain conditions, it can be seen that the longer the dipping time, the higher the hydrogen concentration. In addition, it is presumed, based on the results illustrated in FIG. 5, that the longer the dipping time, that is, the higher the hydrogen concentration, the more it causes lowering of the level of stress and the equivalent plastic strain at which cracking (delayed fracture) occurs.

FIG. 7 illustrates delayed fracture determination conditions (critical values of equivalent plastic strain and hydrogen concentration at which delayed fracture occurs) under constant stress conditions (1100 MPa, 1000 MPa, 900 MPa) obtained from the results of the delayed fracture test. It can be seen that the higher the hydrogen concentration, the lower the stress and strain at which cracking occurs.

The above results (FIGS. 4 to 7) have revealed that, in order to accurately determine a portion in which the delayed fracture will occur in the press formed part that uses a high-tensile steel sheet, it is effective to accurately predict not only the stress distribution and the strain distribution but also the hydrogen concentration distribution in the press formed part.

Furthermore, in predicting delayed fracture in a press formed part, the inventors have also examined a relationship between a stress gradient in a direction of crack propagation (development) due to delayed fracture and delayed fracture characteristics.

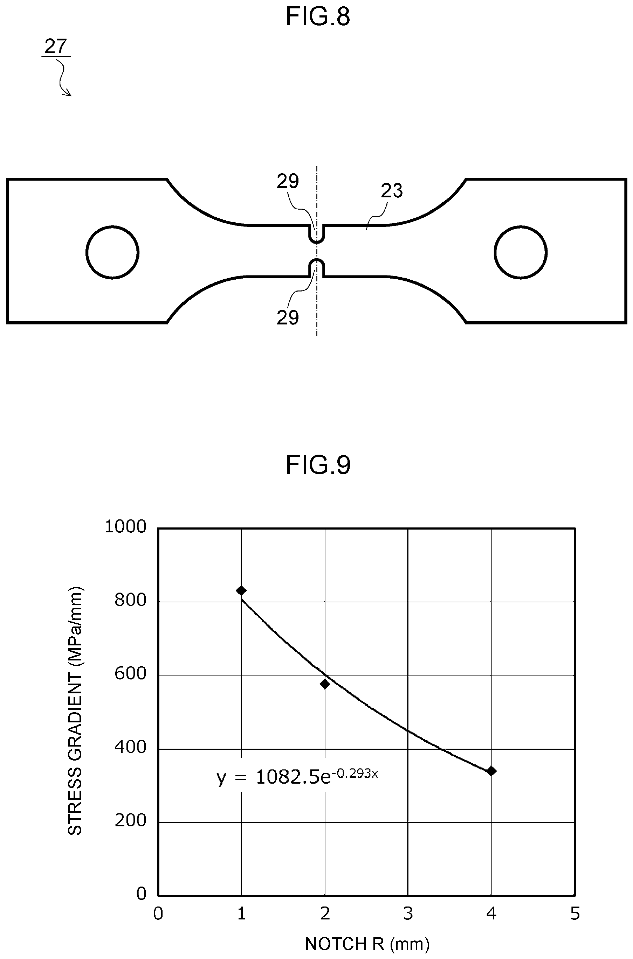

Accordingly, as illustrated in FIG. 8, a delayed fracture test was performed using a uniaxial tensile test piece 27 in which a notch portion 29 was provided in a parallel portion 23. Regarding the uniaxial tensile test piece 27, a high-tensile steel sheet (as an example, a 1470 MPa-class cold-rolled steel sheet having a sheet thickness of 1.2 mm) was used as a test material. In the delayed fracture test, in a state where a constant uniaxial tensile load was applied so that the tensile stress at the vertex (notch bottom) of the notch portion 29 was 1000 MPa, dipping was performed until cracking (delayed fracture) occurred in thiocyanic acid ammonium having a pH= 4.0 and a concentration of 0.1% and a McIlvaine buffer solution.

FIG. 9 illustrates an example of a relationship between the notch R (a punching radius R of the notch portion 29) of the notch portion 29 in the uniaxial tensile test piece 27 and the stress gradient in the direction of crack propagation. Here, the stress gradient in the direction of crack propagation was a direction perpendicular to the maximum principal stress. In addition, FIG. 9 illustrates an expression representing the relationship between the notch R and the stress gradient. In the expression ($y=1082.5e^{-0.293x}$) illustrated in FIG. 9, y is a stress gradient (MPa/mm), and x is a notch R (mm).

As illustrated in FIG. 9, the smaller the notch R of the notch portion 29, the larger the stress gradient. The notch R=0 corresponds to the uniaxial tensile test piece 21 in which the notch portion illustrated in FIG. 2 (a) is not formed, and the stress gradient at the parallel portion 23 of the uniaxial tensile test piece 21 is 0. The uniaxial tensile test piece 21 in which the notch R asymptotically approaches 0 is theoretically considered to correspond to the uniaxial tensile test piece 27 in which the notch portion 29 of the notch R→∞ is formed. Therefore, it is considered that the stress gradient asymptotically approaches 0 at the notch R→∞ of the notch portion 29. Based on this, the relationship between the notch R of the notch portion 29 in the uniaxial tensile test piece 27 and the stress gradient in the direction of crack propagation is expressed using an exponential function equation, as illustrated in FIG. 9, for example.

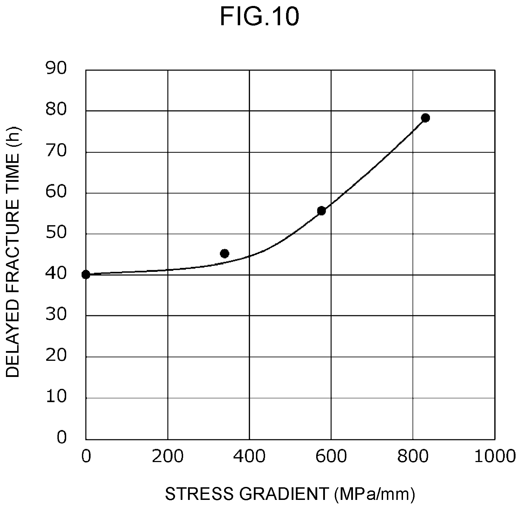

FIG. 10 illustrates the relationship between the stress gradient in the direction of crack propagation due to delayed fracture and the delayed fracture time, obtained by the delayed fracture test using the uniaxial tensile test piece 27 having the notch portion 29. As illustrated in FIG. 10, since the larger the stress gradient in the direction of crack propagation, the longer the delayed fracture time, it can be seen that the occurrence of delayed fracture is prolonged. This is considered to be due to the fact that the occurrence of the crack is prolonged by suppressing the deformation of the portion where the stress is high in which the crack occurs by the surrounding portion where the stress is low.

As described above, from the results illustrated in FIGS. 8 to 10, the inventors have reached the conclusion that in order to accurately predict the delayed fracture of the press formed part, it is necessary to consider not only the stress, the strain, and the hydrogen concentration but also the stress gradient in the direction of crack propagation due to delayed fracture.

Furthermore, the inventors have considered that when a portion where delayed fracture will occur is predicted based on stress, strain, hydrogen concentration, and stress gradient in the press formed part, it would be effective to manufacture the press formed part so that the portion will achieve the stress and strain that are predicted not to cause delayed fracture. The inventors have reached the conclusion that, for this purpose, it is possible to decide the press forming conditions for causing stress and strain which are predicted not to cause delayed fracture by repeatedly executing change of the press forming conditions and prediction of occurrence of delayed fracture in the press formed part under the changed press forming conditions. The present inventors have further found that it is possible to manufacture a press formed part having countermeasure applied for suppressing occurrence of delayed fracture by performing press forming under the press forming conditions decided in this manner.

The present invention has been made based on the results of the examination, and the first and second embodiments of the present invention will be described below.

[First embodiment]

<Method for predicting delayed fracture in press formed part>

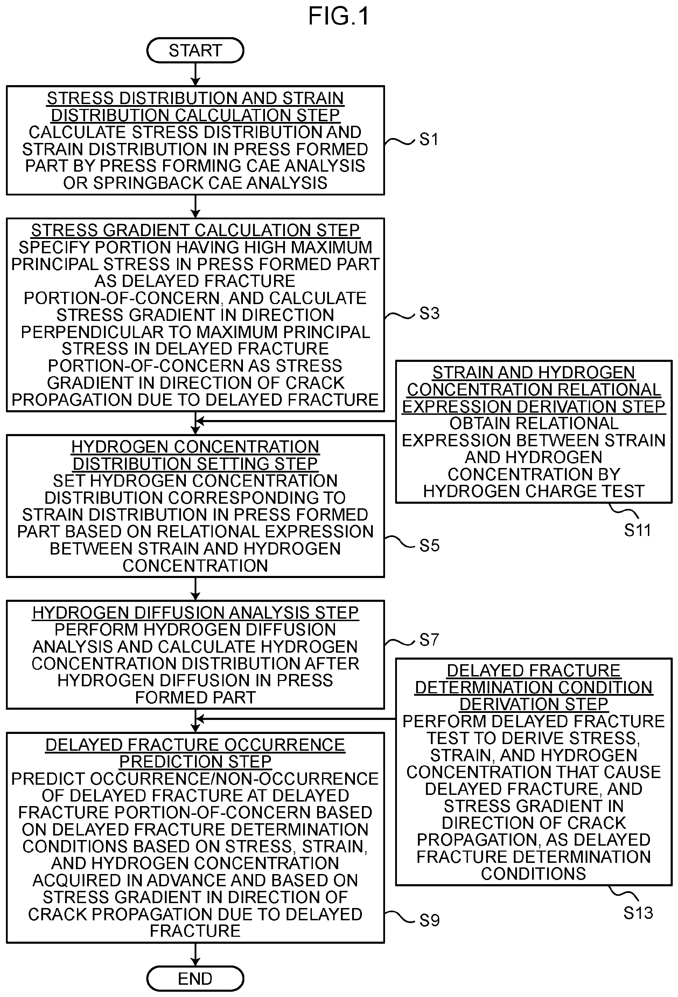

The method for predicting delayed fracture in a press formed part according to the first embodiment of the present invention predicts a portion where delayed fracture will occur at a press formed part of a high-tensile steel sheet. As illustrated in FIG. 1, the method for predicting delayed fracture in the press formed part according to the first embodiment includes a stress distribution and strain distribution calculation step S1, a stress gradient calculation step S3, a hydrogen concentration distribution setting step S5, a hydrogen diffusion analysis step S7, and a delayed fracture occurrence prediction step S9. Each of the above steps will be described below.

<<Stress distribution and strain distribution calculation step>>

The stress distribution and strain distribution calculation step S1 is a step of calculating a stress distribution and a strain distribution in a press formed part.

In the first embodiment, the stress distribution and strain distribution calculation step S1 calculates stress and strain for each CAE analysis element of the press formed part to calculate stress distribution and strain distribution of the press formed part.

The calculation of the stress distribution and the strain distribution in the press formed part can be performed by applying a CAE analysis method generally used in automobile design, etc. Examples of the CAE analysis method include press forming CAE analysis, shearing CAE analysis such as cutting, trimming, or piercing of a sheet material before press forming, springback CAE analysis of a press formed part, and CAE analysis of press formed part assembly. The stress distribution and the strain distribution in the press formed part can be calculated by obtaining stress and strain for each CAE element in the press formed part by CAE analysis using a finite element method.

<<Stress gradient calculation step>>

The stress gradient calculation step S3 is a step of specifying, as a delayed fracture portion-of-concern, a portion where the maximum principal stress is high and delayed fracture is a matter of concern in the press formed part from the stress distribution of the press formed part calculated in the stress distribution and strain distribution calculation step S1. Furthermore, the stress gradient calculation step S3 is a step of calculating a stress gradient in a direction perpendicular to the maximum principal stress at the specified delayed fracture portion-of-concern, as a stress gradient in a direction of crack propagation due to delayed fracture.

In the stress gradient calculation step S3, for example, the maximum principal stress of each CAE analysis element is calculated using the stress calculated for each CAE analysis element of the press formed part in the stress distribution and strain distribution calculation step S1. The CAE analysis element having a high calculated maximum principal stress can be specified as a delayed fracture portion-of-concern in the press formed part.

In addition, since the direction of crack propagation due to the occurrence of delayed fracture is the direction perpendicular to the maximum principal stress, the stress gradient in the direction perpendicular to the maximum principal stress at the delayed fracture portion-of-concern is calculated as the stress gradient in the direction of crack propagation due to delayed fracture.

<<Hydrogen concentration distribution setting step>>

The hydrogen concentration distribution setting step S5 is a step of setting a hydrogen concentration distribution corresponding to the strain distribution of the press formed part calculated in the stress distribution and strain distribution calculation step S1, based on a relational expression between strain and hydrogen concentration acquired in advance for the high-tensile steel sheet.

In the first embodiment, as illustrated in FIG. 1, a strain and hydrogen concentration relational expression derivation step S11 is performed prior to the hydrogen concentration distribution setting step S5 to derive a relational expression between strain and hydrogen concentration in a high-tensile steel sheet used for press forming of a press formed part (the above-described Formula (1)). Subsequently, based on the derived Formula (1), the hydrogen concentration corresponding to the strain (equivalent plastic strain) calculated for each CAE element in the press formed part in the stress distribution and strain distribution calculation step S1 is obtained for each CAE element to set the hydrogen concentration distribution in the press formed part.

In the hydrogen concentration distribution setting step S5, the hydrogen concentration distribution in the press formed part may be set by the following procedure. First, a relational expression between hydrostatic stress and hydrogen concentration in a high-tensile steel sheet used for press forming a press formed part (Formula (3) described above) is acquired in advance. Subsequently, the hydrostatic stress distribution is calculated from the stress distribution of the press formed part calculated in the stress distribution and strain distribution calculation step S1, and the hydrogen concentration distribution corresponding to the hydrostatic stress distribution is calculated based on the relational expression between the hydrostatic stress and the hydrogen concentration acquired in advance (Formula (3) described above). By adding the hydrogen concentration distribution corresponding to the hydrostatic stress distribution to the hydrogen concentration distribution corresponding to the strain (equivalent plastic strain) distribution calculated based on Formula (1) described above in the stress distribution and strain distribution calculation step S1 to set the hydrogen concentration distribution in the press formed part.

(Strain and hydrogen concentration relational expression derivation step)

The strain and hydrogen concentration relational expression derivation step S11 is a step of experimentally obtaining, by a hydrogen charge test, a relational expression between strain and hydrogen concentration in a high-tensile steel sheet used for press forming.

Regarding the relationship between the hydrogen concentration and the strain in the high-tensile steel sheet, as illustrated in FIG. 3 described above, the hydrogen concentration depends only on the equivalent plastic strain regardless of the deformation mode. Therefore, in the hydrogen concentration distribution setting step S5, the strain in the relational expression between the strain and the hydrogen concentration is preferably defined as the equivalent plastic strain, and it is desirable, for example, to derive the relational expression between the equivalent plastic strain and the hydrogen concentration expressed by the above-described Formula (1).

The constants a and b in the Formula (1) can be obtained by performing a general hydrogen charge test. FIG. 3(a) illustrates an example of the measurement results of the equivalent plastic strain and hydrogen concentration obtained by the hydrogen charge test and the results of the relational expression (a=0.52, b=3.9) of the equivalent plastic strain and hydrogen concentration derived from the measurement results.

<<Hydrogen diffusion analysis step>>

The hydrogen diffusion analysis step S7 is a step of performing hydrogen diffusion analysis on the press formed part based on the stress distribution calculated in the stress distribution and strain distribution calculation step S1 and the hydrogen concentration distribution set in the hydrogen concentration distribution setting step S5 to calculate the hydrogen concentration distribution after hydrogen diffusion.

Hydrogen in the press formed part diffuses in accordance with a hydrogen concentration gradient and a hydrostatic stress gradient. Therefore, in order to accurately predict the hydrogen concentration distribution in the press formed part, it is necessary to solve the diffusion equation illustrated in the following Formula (4) to redistribute hydrogen in each CAE element of the press formed part.

$$ J = -D\left(\frac{\partial c}{\partial x_i} + s\kappa_p\frac{\partial p}{\partial x_i}\right) \qquad \cdots (4) $$

$x_i$ is an in-plane direction of the press formed part, J is concentration flux, D is diffusion coefficient, s is solubility, $\kappa_p$ is a coefficient representing stress dependency, c is hydrogen concentration, p is hydrostatic stress, the first term on the right side is hydrogen concentration gradient, and the second term is dependence of hydrogen diffusion on the hydrostatic stress gradient.

When stress concentration exists in the press formed part, the hydrogen concentration when hydrogen accumulates at the stress concentration portion can be accurately predicted by solving Formula (2) in the hydrogen diffusion analysis step S7.

<<Delayed fracture occurrence prediction step>>

The delayed fracture occurrence prediction step S9 is a step of predicting whether delayed fracture will occur at the delayed fracture portion-of-concern specified in the stress gradient calculation step S3.

A first procedure in predicting delayed fracture in the delayed fracture occurrence prediction step S9 is acquiring a delayed fracture determination condition representing a relationship between stress, strain, and hydrogen concentration at a stress gradient corresponding to a stress gradient in a direction of crack propagation, which have been calculated for a delayed fracture portion-of-concern, and occurrence of delayed fracture. Subsequently, whether delayed fracture will occur at the delayed fracture portion-of-concern is predicted based on the acquired delayed fracture determination condition, and the stress, strain, and hydrogen concentration after hydrogen diffusion at the delayed fracture portion-of-concern, which are obtained from the stress distribution and the strain distribution, and the hydrogen concentration distribution after hydrogen diffusion.

The stress and strain at the delayed fracture portion-of-concern are obtained from the stress distribution and strain distribution in the press formed part calculated in the stress distribution and strain distribution calculation step S1. The hydrogen concentration after hydrogen diffusion at the delayed fracture portion-of-concern is obtained from the hydrogen concentration distribution after hydrogen diffusion in the press formed part calculated in the hydrogen diffusion analysis step S7. Furthermore, the stress gradient at the delayed fracture portion-of-concern is defined as a stress gradient in a direction perpendicular to the maximum principal stress calculated in the stress gradient calculation step S3 as a stress gradient in a direction of crack propagation due to delayed fracture.

In addition, the delayed fracture determination condition acquired in the delayed fracture occurrence prediction step S9 is acquired, as illustrated in FIG. 1, by performing a delayed fracture determination condition derivation step S13 prior to the delayed fracture occurrence prediction step S9.

(Delayed fracture determination condition derivation step)

The delayed fracture determination condition derivation step S13 is a step of performing a delayed fracture test of a high-tensile steel sheet used for press forming and deriving, as a delayed fracture determination condition, a relationship between stress, strain, and hydrogen concentration at a portion where delayed fracture occurs and a stress gradient in a direction of crack propagation due to delayed fracture.

In the delayed fracture determination condition derivation step S13, a delayed fracture test piece is prepared using a material in which various equivalent plastic strains are imparted to a high-tensile steel sheet by rolling or the like, and a delayed fracture test is performed on the delayed fracture test piece in which the levels of the uniaxial tensile stress and the amount of hydrogen are changed (dipping time in an acidic solution is changed). The subsequent step is to obtain a relationship between the occurrence/non-occurrence of cracking (delayed fracture) in the delayed fracture test piece and the stress, the equivalent plastic strain, the hydrogen concentration in the uniaxial tensile test piece (the amount of hydrogen intruding the steel), and the stress gradient in the direction of crack propagation due to delayed fracture to derive the delayed fracture determination condition.

In the delayed fracture test for deriving the delayed fracture determination condition, the tensile stress of the notch portion 29 can be changed to various levels by the tensile load applied to the uniaxial tensile test piece 27. In addition, the delayed fracture test piece used in the delayed fracture determination condition derivation step S13 is prepared to have a shape in which the stress gradient in the direction of crack propagation in the delayed fracture portion-of-concern obtained in the stress gradient calculation step S3 matches the stress gradient in the direction of crack propagation in the delayed fracture test piece.

For example, in the case of using the uniaxial tensile test piece 27 (FIG. 8) in which the notch portion 29 is formed in the parallel portion 23 as the delayed fracture test piece, the relationship between the stress gradient in the direction of crack propagation and the notch R is expressed by an expression as illustrated in FIG. 9. Therefore, the notch R of the notch portion 29 is preferably to be determined so as to have a predetermined stress gradient according to the expression illustrated in FIG. 9.

The above description relates to an operation, in the delayed fracture determination condition derivation step S13, of applying a constant uniaxial tensile load to the uniaxial tensile test piece 27 in which the notch portion 29 is imparted to the parallel portion 23 in order to impart a stress gradient in the direction of crack propagation.

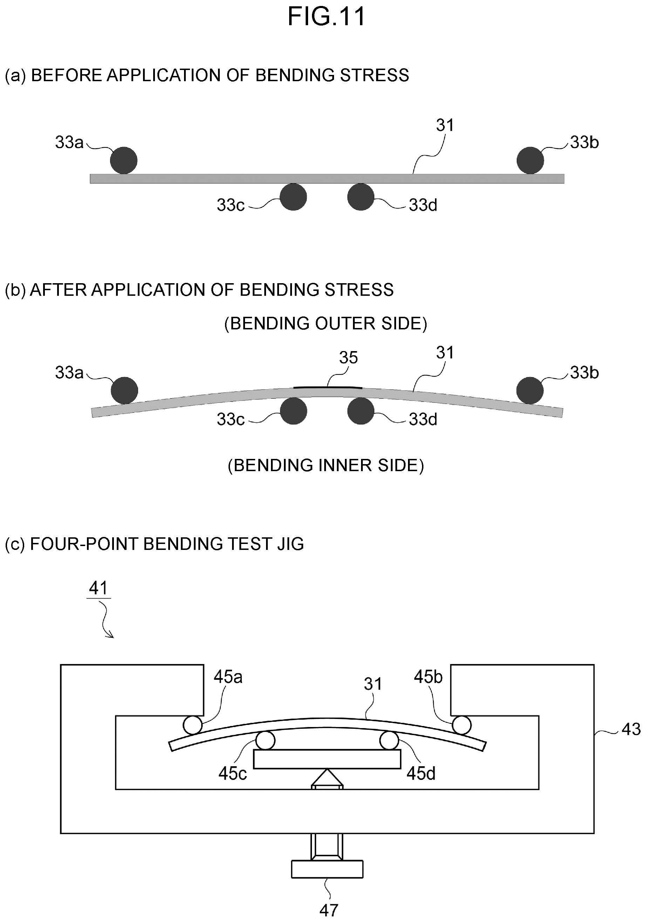

However, it is also allowable, in the delayed fracture determination condition derivation step S13, as illustrated in FIG. 11, to perform a delayed fracture test by a four-point bending test of a four-point bending test piece 31 using a high-tensile steel sheet to which various equivalent plastic strains are imparted by rolling or the like as a test material.

The four-point bending test includes a process of bending in which fulcrums 33a and 33b are disposed above a four-point bending test piece 31, fulcrums 33c and 33d are disposed below the four-point bending test piece, the fulcrums 33a and 3b are lowered, or the fulcrums 33c and 33d are raised, and a bending apex portion 35 is formed on the bending outer side of the four-point bending test piece 31. In the four-point bending test, the raising and lowering of the fulcrum is stopped at a time point where a predetermined pushing amount (raising/lowering amount of the fulcrum) is reached. At this time, the bending apex portion 35 on the bending outer side of the four-point bending test piece 31 is a portion having the maximum tensile stress, and the tensile stress of the bending apex portion 35 can be changed to various levels depending on the pushing amount.

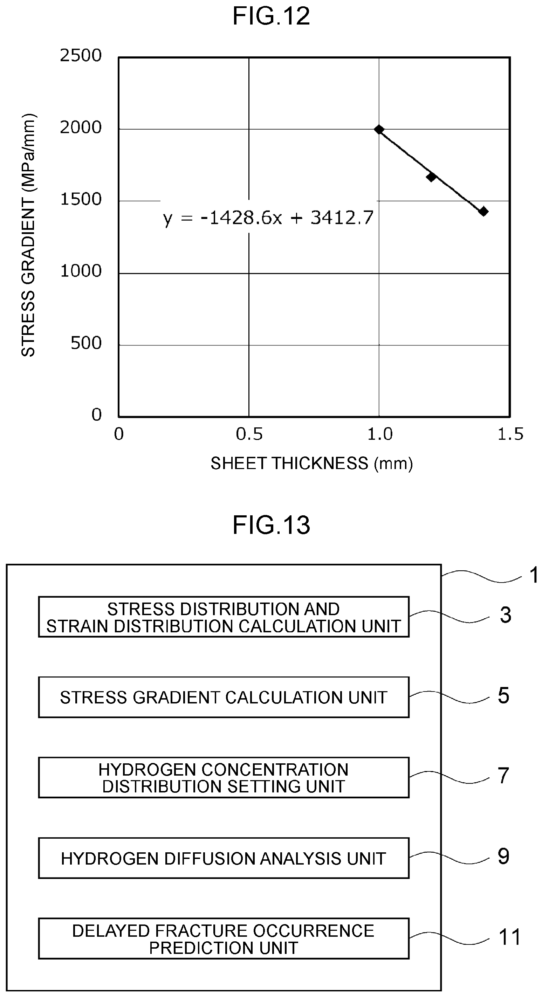

In the four-point bending test, a stress gradient can be generated in the sheet thickness direction from the bending apex portion 35 toward the bending inner side on the bending outer side of the four-point bending test piece 31. In the four-point bending test piece 31 subjected to the four-point bending, crack propagation occurs in the sheet thickness direction from the bending apex portion on the bending outer side, having a relationship between the stress gradient in the propagation direction of the crack and a sheet thickness t of the four-point bending test piece 31 expressed by an expression as illustrated in FIG. 12. In the expression illustrated in FIG. 12, x is the sheet thickness, and y is the stress gradient. Therefore, by fixing the pushing amount of the fulcrums 33a to 33d onto the four-point bending test piece 31 and changing the sheet thickness of the four-point bending test piece 31 in the delayed fracture by the four-point bending test, a desired stress gradient can be imparted to the bending apex portion 35 as illustrated in FIG. 12.

The delayed fracture test using the four-point bending test like this may desirably be performed by using, for example, a four-point bending test jig 41 illustrated in FIG. 11(c) (refer to Patent Literature 4).

The four-point bending test jig 41 includes: fulcrums 45a and 45b formed of insulating glass and provided on a sample stage 43 and disposed above the four-point bending test piece 31; and fulcrums 45c and 45d formed of insulating glass and disposed below the four-point bending test piece 31. The four-point bending test jig 41 further includes a screw 47 provided so as to be able to push the fulcrums 45c and 45d upward.

The first procedure in the four-point bending using the four-point bending test jig 41 is pushing the fulcrums 45c and 45d into the four-point bending test piece 31 by the screw 47 to fix the screw 47 at a pushing amount at which the bending outer side has a desired tensile stress. With this procedure, a tensile stress and a stress gradient in the sheet thickness direction are imparted to the four-point bending test piece 31. Subsequently, the four-point bending test piece 31 is dipped in a hydrogen intrusion environment (for example, pH=4.0, concentration of 0.1% thiocyanic acid ammonium and McIlvaine buffer solution) for a predetermined time together with the four-point bending test jig 41 to which the screw 47 is fixed by a predetermined pushing amount. Furthermore, the amount of hydrogen intruding the four-point bending test piece 31 is changed to various levels by changing the time of dipping in the hydrogen intrusion environment to evaluate the occurrence/non-occurrence of cracking in the four-point bending test piece 31.

In the delayed fracture test using such a four-point bending test jig, it is also possible to derive the delayed fracture determination condition representing the relationship between the stress, the strain, the hydrogen concentration, and the stress gradient in the direction of crack propagation, and the occurrence/non-occurrence of delayed fracture.

As described above, with the method for predicting delayed fracture in the press formed part according to the first embodiment, a portion having a high maximum principal stress in the press formed part is specified from the stress distribution of the press formed part as a delayed fracture portion-of-concern where delayed fracture is a matter of concern, making it possible to perform high-accuracy prediction as to whether delayed fracture will occur during use of the press formed part of the high-tensile steel sheet in consideration of a stress gradient in a direction of crack propagation due to delayed fracture at the specified delayed fracture portion-of-concern. Furthermore, according to the method for predicting delayed fracture in the press formed part according to the first embodiment, it is possible to predict not only whether delayed fracture will occur in the press formed part but also a portion where in the press formed part delayed fracture will occur. This makes it possible to take measures against delayed fracture, such as changing the shape of the press formed part and the press forming step so as not to cause delayed fracture at the design stage of the press formed part.

<Device for predicting delayed fracture in press formed part>

A device for predicting delayed fracture in a press formed part 1 according to the first embodiment of the present invention (hereinafter, referred to as a "delayed fracture prediction device 1") predicts a portion where delayed fracture will occur in a press formed part of a high-tensile steel sheet. As illustrated in FIG. 13, the delayed fracture prediction device 1 includes, as an example, a stress distribution and strain distribution calculation unit 3, a stress gradient calculation unit 5, a hydrogen concentration distribution setting unit 7, a hydrogen diffusion analysis unit 9, and a delayed fracture occurrence prediction unit 11. The delayed fracture prediction device 1 may be configured by a Central Processing Unit (CPU) of a computer (such as a PC). In this case, each of the above units functions when the CPU of the computer executes a predetermined program.

<<Stress distribution and strain distribution calculation unit>>

The stress distribution and strain distribution calculation unit 3 calculates a stress distribution and a strain distribution in the press formed part.

In the delayed fracture prediction device 1 according to the first embodiment, the stress distribution and strain distribution calculation unit 3 calculates stress and strain for each CAE analysis element of the press formed part to calculate stress distribution and strain distribution in the press formed part.

The calculation of the stress distribution and the strain distribution in the press formed part performed by the stress distribution and strain distribution calculation unit 3 can be performed by applying a CAE analysis method generally used in automobile design, etc. Examples of the CAE analysis method include press forming CAE analysis, shearing CAE analysis such as cutting, trimming, or piercing of a sheet material before press forming, springback CAE analysis of a press formed part, and CAE analysis of press formed part assembly. The stress distribution and the strain distribution in the press formed part can be calculated by obtaining stress and strain for each CAE element in the press formed part by CAE analysis using a finite element method.

<<Stress gradient calculation unit>>

The stress gradient calculation unit 5 specifies a portion having a high maximum principal stress in the press formed part as a delayed fracture portion-of-concern where delayed fracture is a matter of concern from the stress distribution of the press formed part calculated by the stress distribution and strain distribution calculation unit 3. Furthermore, the stress gradient calculation unit 5 is a unit of calculating a stress gradient in a direction perpendicular to the maximum principal stress at the specified delayed fracture portion-of-concern, as a stress gradient in a direction of crack propagation due to delayed fracture.

In the stress gradient calculation unit 5, for example, the maximum principal stress of each CAE analysis element is calculated using the stress calculated for each CAE analysis element of the press formed part by the stress distribution and strain distribution calculation unit 3. The CAE analysis element having a high calculated maximum principal stress can be specified as a delayed fracture portion-of-concern in the press formed part.

<<Hydrogen concentration distribution setting unit>>

The hydrogen concentration distribution setting unit 7 is a unit of setting a hydrogen concentration distribution corresponding to the strain distribution of the press formed part calculated by the stress distribution and strain distribution calculation unit 3, based on a relational expression between strain and hydrogen concentration acquired in advance for the high-tensile steel sheet.

In the first embodiment, the hydrogen concentration distribution setting unit 7 obtains the hydrogen concentration corresponding to the strain (equivalent plastic strain) for each CAE analysis element of the press formed part based on the relational expression between the equivalent plastic strain and the hydrogen concentration (Formula (1) described above) acquired in advance for the high-tensile steel sheet. This makes it possible to set the hydrogen concentration distribution corresponding to the strain distribution in the press formed part.

The hydrogen concentration distribution setting unit 7 may set the hydrogen concentration distribution in the press formed part by the following procedure. First, a relational expression between hydrostatic stress and hydrogen concentration in a high-tensile steel sheet used for press forming a press formed part (Formula (3) described above) is acquired in advance. Next, the hydrostatic stress distribution is calculated from the stress distribution of the press formed part calculated by the stress distribution and strain distribution calculation unit 3, and the hydrogen concentration distribution corresponding to the hydrostatic stress distribution is calculated based on the relational expression between the hydrostatic stress and the hydrogen concentration (Formula (3) described above). The hydrogen concentration distribution corresponding to the hydrostatic stress distribution is added to the hydrogen concentration distribution corresponding to the strain distribution calculated by the stress distribution and strain distribution calculation unit 3 to set the hydrogen concentration distribution in the press formed part.

<<Hydrogen diffusion analysis unit>>

The hydrogen diffusion analysis unit 9 is a unit of performing hydrogen diffusion analysis on the press formed part based on the stress distribution calculated by the stress distribution and strain distribution calculation unit 3 and the hydrogen concentration distribution set by the hydrogen concentration distribution setting unit 7 to calculate the hydrogen concentration distribution after hydrogen diffusion.

As described above, hydrogen in the press formed part diffuses in accordance with the hydrogen concentration gradient and the hydrostatic stress gradient. Therefore, based on the stress distribution calculated by the stress distribution and strain distribution calculation unit 3 and the hydrogen concentration distribution set by the hydrogen concentration distribution setting unit 7, the hydrogen diffusion analysis unit 9 calculates the hydrogen concentration for each CAE element of the press formed part by solving the diffusion equation illustrated in Formula (4) described above. This makes it possible for the hydrogen diffusion analysis unit 9 to calculate the hydrogen concentration distribution after hydrogen diffusion in consideration of the hydrogen concentration gradient and the hydrostatic stress gradient.

<<Delayed fracture occurrence prediction unit>>

The delayed fracture occurrence prediction unit 11 is a unit of predicting whether delayed fracture will occur at the delayed fracture portion-of-concern specified by the stress gradient calculation unit 5.

A first procedure in predicting delayed fracture by the delayed fracture occurrence prediction unit 11 is acquiring a delayed fracture determination condition representing a relationship between stress, strain, and hydrogen concentration at a stress gradient corresponding to a stress gradient in a direction of crack propagation, which have been calculated for a delayed fracture portion-of-concern, and occurrence of delayed fracture. As the delayed fracture determination condition, for example, it is desirable to acquire the relationship between the stress, the strain, the hydrogen concentration, the stress gradient in the direction of crack propagation, and the occurrence/non-occurrence of delayed fracture derived by performing the delayed fracture determination condition derivation step S13 of the method of determining delayed fracture of a press formed part according to the first embodiment.

Subsequently, whether delayed fracture will occur at the delayed fracture portion-of-concern is predicted based on the acquired delayed fracture determination condition, and the stress, strain, and hydrogen concentration after hydrogen diffusion at the delayed fracture portion-of-concern, which are obtained from the stress distribution and the strain distribution, and the hydrogen concentration distribution after hydrogen diffusion.

The stress and strain at the delayed fracture portion-of-concern are obtained from the stress distribution and strain distribution in the press formed part calculated by the stress distribution and strain distribution calculation unit 3. The hydrogen concentration after hydrogen diffusion at the delayed fracture portion-of-concern is obtained from the hydrogen concentration distribution after hydrogen diffusion in the press formed part calculated by the hydrogen diffusion analysis unit 9. Furthermore, the stress gradient at the delayed fracture portion-of-concern is defined as a stress gradient in a direction perpendicular to the maximum principal stress calculated by the stress gradient calculation unit 5 as a stress gradient in a direction of crack propagation due to delayed fracture.

The stress, strain, and hydrogen concentration after hydrogen diffusion at the delayed fracture portion-of-concern are preferably set to be the stress, strain, and hydrogen concentration after hydrogen diffusion calculated for the CAE analysis element having a high maximum principal stress specified as the delayed fracture portion-of-concern by the stress gradient calculation unit 5.

<Program for predicting delayed fracture in high-tensile steel sheet>

The first embodiment of the present invention can be configured as a program for predicting delayed fracture in a press formed part. That is, the program for predicting delayed fracture in the press formed part according to the first embodiment (hereinafter, referred to as a "delayed fracture prediction program") predicts a portion where delayed fracture will occur in a press formed part of a high-tensile steel sheet. The delayed fracture prediction program causes a computer to function as units, as illustrated in FIG. 13, including, as an example, the stress distribution and strain distribution calculation unit 3, the stress gradient calculation unit 5, the hydrogen concentration distribution setting unit 7, the hydrogen diffusion analysis unit 9, and the delayed fracture occurrence prediction unit 11.

As described above, similarly to the method for predicting delayed fracture in the press formed part according to the first embodiment, also in the device for predicting delayed fracture in the press formed part and program, a portion having a high maximum principal stress in the press formed part is specified from the stress distribution of the press formed part as a delayed fracture portion-of-concern where delayed fracture is a matter of concern, making it possible to predict whether delayed fracture will occur during use of the press formed part of the high-tensile steel sheet in consideration of a stress gradient in a direction of crack propagation due to delayed fracture at the specified delayed fracture portion-of-concern. As a result, not only whether the delayed fracture will occur in the press formed part but also a portion where the delayed fracture will occur can be predicted in the design stage of the part, making it possible to take a countermeasure against the delayed fracture, such as changing the part shape and the press forming step so as not to cause the delayed fracture.

The method for predicting delayed fracture in the press formed part according to the first embodiment described above experimentally obtains the relational expression between strain and hydrogen concentration in a high-tensile steel sheet used for press forming by a hydrogen charge test by performing the strain and hydrogen concentration relational expression derivation step S11. However, the method for predicting delayed fracture in the press formed part according to the present invention is not limited to the method of performing the strain and hydrogen concentration relational expression derivation step S11, and may be a method of acquiring a relational expression between known strain and hydrogen concentration for a high-tensile steel sheet formed of the same material (steel type and tensile strength).

The method for predicting delayed fracture in the press formed part according to the first embodiment experimentally derives the delayed fracture determination condition by performing the delayed fracture determination condition derivation step S13. However, the method for predicting delayed fracture in the press formed part according to the present invention is not limited to the method of performing the delayed fracture determination condition derivation step S13, and may be a method of acquiring the delayed fracture determination condition already derived for a high-tensile steel sheet of the same material (steel type and tensile strength).

[Second embodiment]

<Method for manufacturing press formed part>

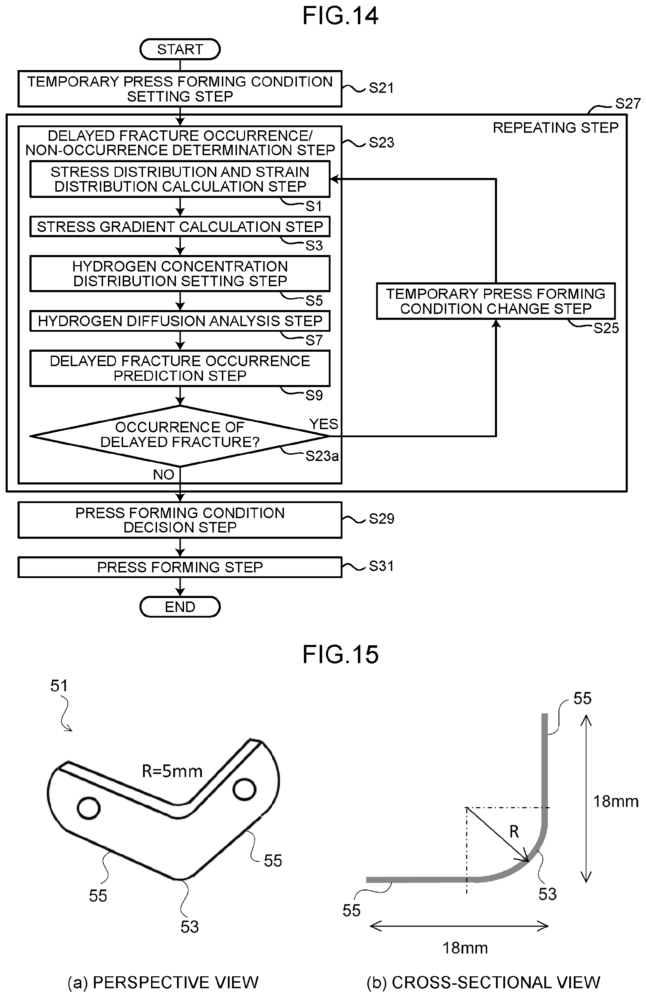

A method for manufacturing a press formed part according to a second embodiment of the present invention is a method for manufacturing a press formed part that uses a high-tensile steel sheet while suppressing occurrence of delayed fracture in the press formed part. As illustrated in FIG. 14 as an example, the method for manufacturing the press formed part according to the second embodiment includes a temporary press forming condition setting step S21, a delayed fracture occurrence/non-occurrence determination step S23, a temporary press forming condition change step S25, and a repeating step S27. As illustrated in FIG. 14, the method for manufacturing the press formed part according to the second embodiment further includes a press forming condition decision step S29 and a press forming step S31. Each of the above steps will be described below.

<<Temporary press forming condition setting step>>

The temporary press forming condition setting step S21 is a step of setting a temporary press forming condition for the press formed part.

Examples of the temporary press forming condition set in the temporary press forming condition setting step S21 include a bend R (radius of punch shoulder part) of a bent portion obtained by bending a steel sheet when a press formed part having the bent portion is a target. Other examples include a clearance between a punch and a die/die for press, a sheet thickness of a steel sheet, etc. Furthermore, in the case of the draw-bending method (stretch bending, or bending and stretching), the radius of die shoulder part, other conditions such as the clearance of the side wall part, the blank holder pressure, etc. can be included in the examples.

<<Delayed fracture occurrence/non-occurrence determination step>>

The delayed fracture occurrence/non-occurrence determination step S23 predicts whether delayed fracture will occur in a delayed fracture occurrence portion-of-concern specified for the press formed part based on the temporary press forming condition set in the temporary press forming condition setting step S21. The specifying of the delayed fracture occurrence portion-of-concern in the press formed part and the prediction of the delayed fracture are performed by the above-described method for predicting delayed fracture in the press formed part according to the present invention. The delayed fracture occurrence/non-occurrence determination step S23 is a step of determining the occurrence/non-occurrence of delayed fracture in the press formed part based on the result of predicting the occurrence of delayed fracture at the delayed fracture occurrence portion-of-concern.

As illustrated in FIG. 14, the delayed fracture occurrence/non-occurrence determination step S23 in the second embodiment sequentially performs a stress distribution and strain distribution calculation step S1, a stress gradient calculation step S3, a hydrogen concentration distribution setting step S5, a hydrogen diffusion analysis step S7, and a delayed fracture occurrence prediction step S9.

The stress distribution and strain distribution calculation step S1, the stress gradient calculation step S3, the hydrogen concentration distribution setting step S5, the hydrogen diffusion analysis step S7, and a delayed fracture occurrence prediction step S9 are similar to the steps in the first embodiment described above. However, in the stress distribution and strain distribution calculation step S1, press forming CAE analysis is performed using the temporary press forming condition set in the temporary press forming condition setting step S21, and the stress distribution and strain distribution of the press formed part that has been press formed under the temporary press forming condition are calculated. In addition, shear CAE analysis, springback CAE analysis, CAE analysis of press formed part assembly, etc. are only required to be performed as necessary.

Furthermore, when it is predicted that delayed fracture will occur at the delayed fracture portion-of-concern in the delayed fracture occurrence prediction step S9, the delayed fracture occurrence/non-occurrence determination step S23 determines occurrence of delayed fracture in the press formed part (S23a). In contrast, when it is predicted in the delayed fracture occurrence prediction step S9 that delayed fracture will not occur in the delayed fracture portion-of-concern, it is determined no occurrence of delayed fracture in the press formed part (S23a).

<<Temporary press forming condition change step>>

The temporary press forming condition change step S25 is a step of changing the temporary press forming condition when the delayed fracture occurrence/non-occurrence determination step S23 has determined that there is occurrence of delayed fracture in the press formed part.

The change of the temporary press forming condition may preferably be performed to alleviate the stress and strain at the delayed fracture portion-of-concern where the delayed fracture is predicted to occur in the press formed part in the delayed fracture occurrence prediction step S9, and for example, the bend R of the bent portion subjected to bending is desirably to be increased.

<<Repeating step>>

The repeating step S27 repeatedly executes the delayed fracture occurrence/non-occurrence determination step S23 and the temporary press forming condition change step S25 under the temporary press forming condition changed in the temporary press forming condition change step S25. This repetition is performed until the delayed fracture occurrence/non-occurrence determination step S23 determines that there is no occurrence of delayed fracture. Therefore, when it is not determined that there is no occurrence of delayed fracture only by changing the temporary press forming condition once, the temporary press forming condition change step S25 is also repeated.

<<Press forming condition decision step>>

In a case where it is determined in the delayed fracture occurrence/non-occurrence determination step S23 that there is no occurrence of delayed fracture in the press formed part, the press forming condition decision step S29 decides the temporary press forming condition in this case as the press forming condition.

<<Press forming step>>

The press forming step S31 is a step of press forming a high-tensile steel sheet into a press formed part under the press forming conditions decided in the press forming condition decision step S29.

As described above, in the method for manufacturing the press formed part according to the second embodiment, the occurrence/non-occurrence of delayed fracture in the press formed part is determined based on the method for predicting delayed fracture in the press formed part according to the present invention, and the press forming conditions for suppressing the occurrence of the delayed fracture are decided based on the determination result. This makes it possible to shorten the period for deciding the press forming conditions capable of suppressing the occurrence of delayed fracture in the press formed part that uses a high-tensile steel sheet. Furthermore, by press forming the press formed part under the press forming conditions decided in this manner, it is possible to manufacture a press formed part having a countermeasure applied for suppressing occurrence of delayed fracture.

The method for predicting delayed fracture in the press formed part and the method for manufacturing the press formed part according to the present invention are intended for a high-tensile steel sheet as a target, and can be preferably applied particularly to a high-tensile steel sheet having a tensile strength of 1 GPa or more at which occurrence of delayed fracture is concerned.

Furthermore, the press formed part as the target of the present invention is not limited to a specific part, but can be preferably applied to vehicle body frame parts such as a center pillar or an A pillar lower obtained by press forming a high-tensile steel sheet.

[Implementation Example 1]

An experiment and analysis performed for confirming operational effects of the present invention will be described below.

In Implementation Example 1, a press formed part 51 illustrated in FIG. 15 was used as a target to predict a portion where delayed fracture will occur. The press formed part 51 is obtained by press forming a 1470 MPa-class cold-rolled steel sheet (sheet thickness: 1.2 mm) being a high-tensile steel sheet, and includes a bent portion 53 and a piece portion 55 extending from both ends of the bent portion 53 as illustrated in FIG. 15. In the press formed part 51, the radius of curvature of the bent portion 53 was set to 5 mm.

First, as a result of the delayed fracture test of the press formed part 51, cracking (delayed fracture) occurred from the sheet thickness center portion in the vicinity of the bending apex of the bent portion 53.

Subsequently, the method for predicting delayed fracture in the press formed part according to the first embodiment described above was used to predict a portion where delayed fracture will occur in the press formed part 51.

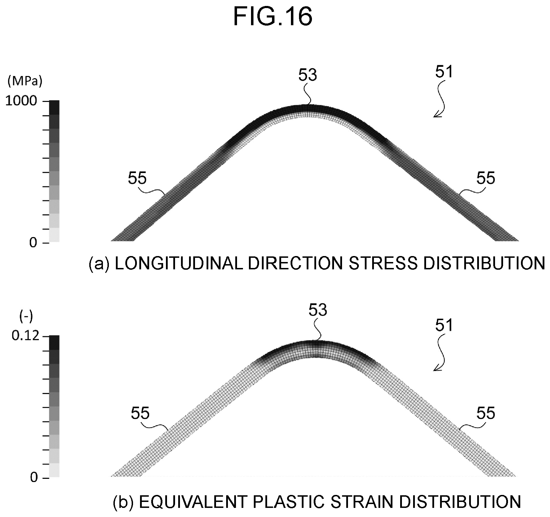

First, press forming CAE analysis in the process of bending a 1470 MPa-class cold-rolled steel sheet having a sheet thickness of 1.2 mm into a press formed part 51 was performed, and as illustrated in FIG. 16, stress and equivalent plastic strain were calculated for each CAE analysis element as stress distribution and strain distribution of the press formed part 51.

The maximum principal stress in the bent portion 53 is stress in the longitudinal direction of the press formed part 51, and it can be seen from the stress distribution illustrated in FIG. 16(a) that the maximum principal stress is high in a range from the bending outer side near the bending apex of the bent portion 53 toward the sheet thickness center portion. In particular, the maximum principal stress values at the sheet thickness center portion (portion A) and the surface (portion B) at the bending apex of the bent portion 53 were 1120 MPa and 980 MPa, respectively, which were higher than the maximum principal stress values at the other portions. Accordingly, portion A and portion B in the bent portion 53 were specified as delayed fracture portions-of-concern.

Next, a stress gradient in a direction perpendicular to the maximum principal stress at the delayed fracture portion-of-concern, that is, a stress gradient in the sheet thickness direction at the bending apex of the bent portion 53 was calculated as a stress gradient in a direction of crack propagation due to delayed fracture. In the stress distribution of the press formed part 51 illustrated in FIG. 16(a), the stress gradient in the direction perpendicular to the bending maximum principal stress in portion A and portion B was each 466 MPa/mm.

Next, a hydrogen concentration distribution was set in the press formed part 51. In Implementation Example 1, hydrogen concentration distribution was set in the press formed part 51 for both of the following Cases 1 and 2.

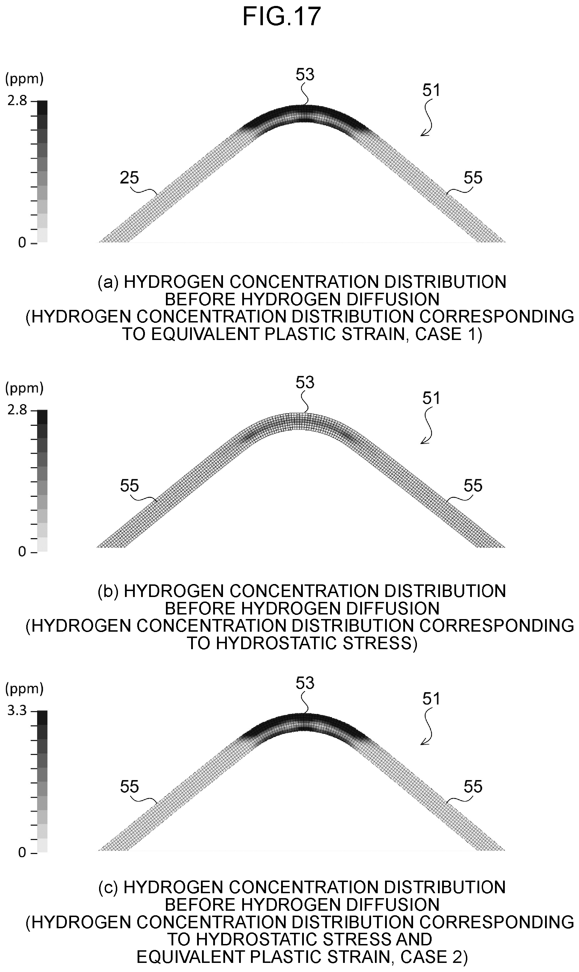

In Case 1, first, the hydrogen concentration of the press formed part 51 corresponding to the strain (equivalent plastic strain) was calculated for each CAE analysis element of the press formed part 51 based on the relational expression between the equivalent plastic strain and the hydrogen concentration illustrated in Formula (1) described above to set the hydrogen concentration distribution of the press formed part 51. FIG. 17(a) illustrates a hydrogen concentration distribution that has been set to correspond to the equivalent plastic strain of the press formed part 51.

On the other hand, in Case 2, the hydrostatic stress distribution was first calculated from the stress distribution of the press formed part 51, and then, the hydrogen concentration corresponding to the hydrostatic stress was calculated for each CAE analysis element of the press formed part 51 based on the relational expression between the hydrostatic stress and the hydrogen concentration illustrated in Formula (3) described above. Subsequently, for each CAE analysis element, the hydrogen concentration corresponding to the hydrostatic stress was added to the hydrogen concentration corresponding to the strain (equivalent plastic strain). The hydrogen concentration calculated for each CAE analysis element of the press formed part 51 in this manner was set as a hydrogen concentration distribution corresponding to the hydrostatic stress distribution and the strain (equivalent plastic strain) distribution in the press formed part 51. FIG. 17(b) illustrates a hydrogen concentration distribution obtained by calculating the hydrogen concentration corresponding to the hydrostatic stress for each CAE analysis element. Furthermore, FIG. 17(c) illustrates a hydrogen concentration distribution obtained by adding the hydrogen concentration corresponding to the hydrostatic stress to the hydrogen concentration corresponding to the strain (equivalent plastic strain) for each CAE analysis element.

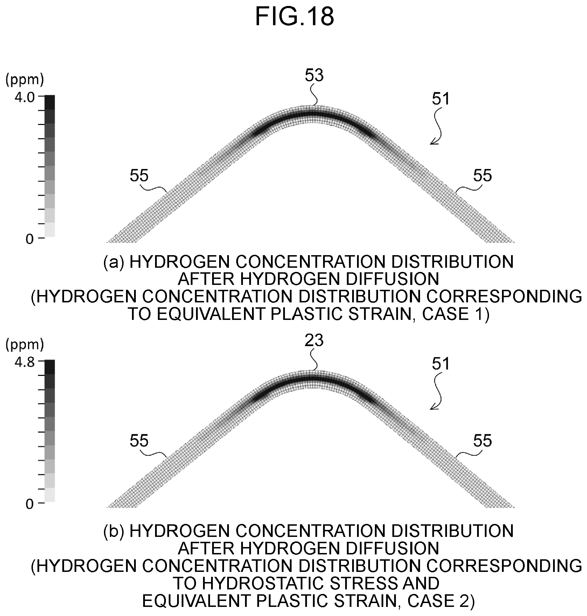

Next, hydrogen diffusion analysis was performed based on the stress and the hydrogen concentration calculated for each CAE analysis element of the press formed part 51, and the hydrogen concentration after hydrogen diffusion was calculated for each CAE analysis element to obtain the hydrogen concentration distribution after hydrogen diffusion. FIGS. 18(a) and 18(b) illustrate the distribution of the hydrogen concentration after hydrogen diffusion in the press formed part 51 obtained for each of (Case 1) and (Case 2).

Next, in order to derive a delayed fracture determination condition at a delayed fracture portions-of-concern (Portions A and B), a delayed fracture test was performed using the uniaxial tensile test piece 27 in which the notch portion 29 was formed in the parallel portion 23 illustrated in FIG. 8 described above.

Regarding the shape of the uniaxial tensile test piece 27, a notch R capable of imparting, to the notch portion 29, a stress gradient corresponding to a stress gradient in a direction of crack propagation in portion A and portion B, which are delayed fracture portions-of-concern, was decided based on FIG. 9 described above. As described above, the stress gradient in the direction in which the crack propagated in portion A and portion B was 466 MPa/mm. Therefore, it can be seen from FIG. 9 that the notch R to impart the stress gradient to the notch portion 29 is preferably set to be 2.9 mm.

Subsequently, the uniaxial tensile test piece 27 was dipped in a hydrogen intrusion environment (pH=4.0, concentration of 0.1% thiocyanic acid ammonium and McIlvaine buffer solution) for a predetermined time and held in a state where the stress gradient was imparted to the notch portion 29. Subsequently, the stress, strain, and hydrogen concentration in the notch portion 29 were changed to various levels, and the relationship between the stress, strain, and hydrogen concentration in the notch portion 29 and the occurrence of delayed fracture in the notch portion 29 was derived as the delayed fracture determination condition.

Furthermore, based on the delayed fracture determination conditions derived by the delayed fracture test using the uniaxial tensile test piece 27 and based on the stress, equivalent plastic strain, and hydrogen concentration at the delayed fracture portions-of-concern (Portions A and B) in the press formed part 51, whether delayed fracture will occur at the delayed fracture portion-of-concern was predicted.

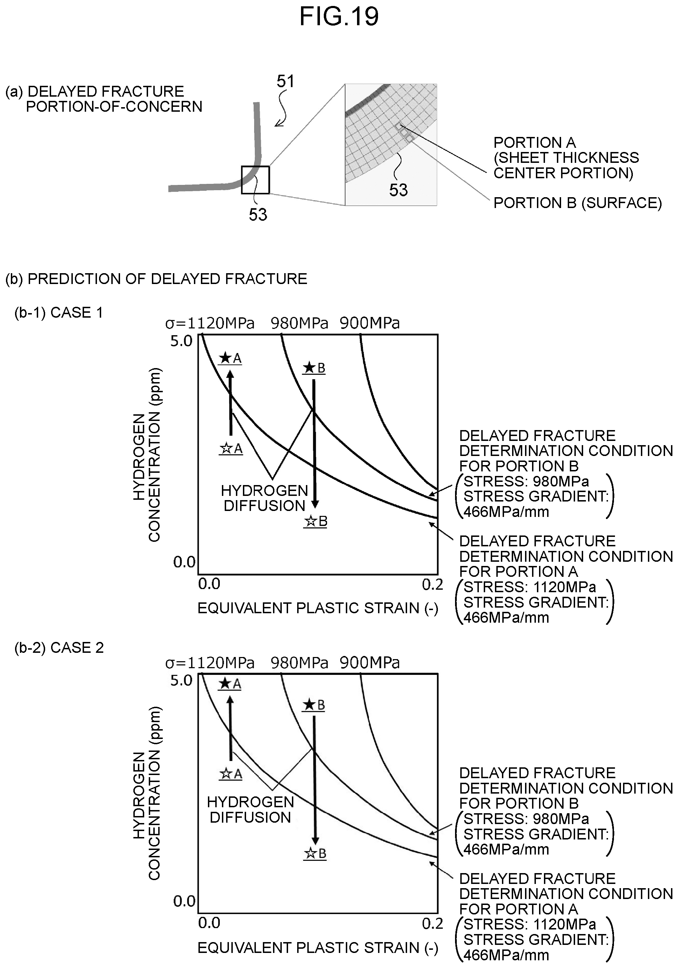

The stress was 1120 MPa in portion A of the bent portion 53, and thus, the relationship between the equivalent plastic strain and the hydrogen concentration at the stress of 1120 MPa illustrated in FIG. 19(b) was used as the delayed fracture determination condition in portion A. On the other hand, since the stress was 980 MPa in portion B of the bent portion 53, the relationship between the equivalent plastic strain and the hydrogen concentration at the stress of 980 MPa illustrated in FIG. 19(b) was used as the delayed fracture determination condition in portion B. The relationship between the equivalent plastic strain and the hydrogen concentration at $\sigma$=1120 MPa and $\sigma$=980 MPa illustrated in FIG. 19(b) was each derived by a delayed fracture test using the uniaxial tensile test piece 27 in which a stress gradient (=466 MPa/mm) of a delayed fracture portions-of-concern (portions A and B) was imparted to the notch portion 29.

Table 1 illustrates hydrogen concentrations in portions A and B of (Case 1) and (Case 2). By considering the hydrogen concentration distribution corresponding to the hydrostatic stress distribution and the strain (equivalent plastic strain) distribution in (Case 2), the hydrogen concentration increased by +13.6% at the maximum (after hydrogen diffusion in portion B) and by +7.7% on average as compared with (Case 1).

**Table 1**

| Bent portion 23 | Equivalent plastic strain | Stress (MPa) | Hydrogen concentration (ppm) | | | |
| --- | --- | --- | --- | --- | --- | --- |
| | | | (Case 1) | | (Case 2) | |
| | | | Before hydrogen diffusion | After hydrogen diffusion | Before hydrogen diffusion | After hydrogen diffusion |
| Sheet thickness center portion (portion A) | 0.023 | 1120 | 2.7 | 4.5 | 2.9 (+9.4%) | 4.8 (+6.7%) |
| Surface (portion B) | 0.092 | 980 | 4.3 | 1.1 | 4.4 (+1.2%) | 1.3 (+13.6%) |

First, when the hydrogen concentration before the hydrogen diffusion analysis was used in the determination of delayed fracture in portion A in (Case 1), as illustrated in FIG. 19(b-1), the hydrogen concentration before the hydrogen diffusion analysis (☆A in the drawing) is lower than the hydrogen concentration when the equivalent plastic strain was equal under the cracking determination condition of $\sigma$=1120 MPa, and thus it was determined that delayed fracture (cracking) would not occur. However, the hydrogen concentration (*A in the drawing) after the hydrogen diffusion analysis was higher than the hydrogen concentration in the cracking determination condition, and thus it was determined that delayed fracture would occur.

Next, in the determination of delayed fracture in portion B in (Case 1), when the hydrogen concentration before the hydrogen diffusion analysis was used, as illustrated in FIG. 19(b-1), the hydrogen concentration before the hydrogen diffusion analysis (*B in the drawing) is higher than the hydrogen concentration when the equivalent plastic strain was equal under the cracking determination condition of $\sigma$=980 MPa, and thus it was determined that delayed fracture would occur. However, the hydrogen concentration (☆B in the drawing) after the hydrogen diffusion analysis was lower than the hydrogen concentration in the cracking determination condition, and thus it was determined that delayed fracture would not occur.

When the hydrogen concentration before the hydrogen diffusion analysis was used in the determination of delayed fracture in portion A in (Case 2), as illustrated in FIG. 19(b-2), the hydrogen concentration before the hydrogen diffusion analysis (☆A in the drawing) is lower than the hydrogen concentration when the equivalent plastic strain was equal under the cracking determination condition of $\sigma$=1120 MPa, and thus it was determined that delayed fracture would not occur. However, the hydrogen concentration (*A in the drawing) after the hydrogen diffusion analysis was higher than the hydrogen concentration in the cracking determination condition, and thus it was determined that delayed fracture would occur.

In the determination of delayed fracture in portion B in (Case 2), when the hydrogen concentration before the hydrogen diffusion analysis was used, as illustrated in FIG. 19(b-2), the hydrogen concentration before the hydrogen diffusion analysis (★B in the drawing) is higher than the hydrogen concentration when the equivalent plastic strain was equal under the cracking determination condition of $\sigma$=980 MPa, and thus it was determined that delayed fracture would occur. However, the hydrogen concentration (☆B in the drawing) after the hydrogen diffusion analysis was lower than the hydrogen concentration in the cracking determination condition, and thus it was determined that delayed fracture would not occur.

From these determination results, it was predicted that in the press formed part 51, in both (Case 1) and (Case 2), delayed fracture would not occur on the surface (portion B) of the bent portion 53, and that delayed fracture would occur at the sheet thickness center portion (portion A) of the bent portion 53. This prediction result satisfactorily matches the position where the delayed fracture will occur in the delayed fracture test.

As described above, according to the present invention, it has been demonstrated that a portion where delayed fracture will occur in a press formed part of a high-tensile steel sheet can be accurately predicted.

[Implementation Example 2]

Implementation Example 2 related to press forming of the press formed part 51 illustrated in FIG. 15, in which the temporary press forming condition was changed so as not to cause delayed fracture, the occurrence/non-occurrence of delayed fracture was determined, and the press formed part 51 was press formed under the press forming condition determined not to cause delayed fracture.

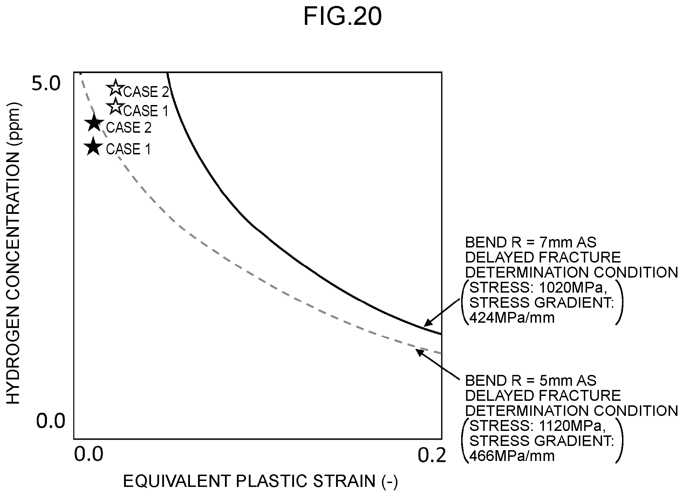

The press formed part 51 is obtained by press forming a 1470 MPa-class cold-rolled steel sheet (sheet thickness: 1.2 mm) which is a high-tensile steel sheet similarly to Implementation Example 1. Then, temporary press forming condition was set in which the bend R of the bent portion 53, which was a concerned portion to cause delayed fracture in Implementation Example 1, was changed from 5 mm to 7 mm. The stress at portion A (refer to FIG. 20 (a)) of the bent portion 53 of the press formed part 51 press formed under the set temporary press forming condition decreased from 1120 MPa (bend R=5 mm) to 1020 MPa (bend R=7 mm). In addition, the equivalent plastic strain in portion A of the bent portion 53 decreased from 0.023 (bend R=5 mm) to 0.010 (bend R=7 mm).

In the bent portion 53 having a bend R of 5 mm, the stress gradient in the direction perpendicular to the maximum principal stress in each of portion A and portion B was 466 MPa/mm. Furthermore, in the bent portion 53 having a bend R of 7 mm, all of the stress gradients in the direction perpendicular to the maximum principal stress in portion A and portion B were 424 MPa/mm.

Furthermore, the hydrogen concentration distribution in the press formed part 51 was set similarly to (Case 1) and (Case 2) of Implementation Example 1 described above. Here, (Case 1) is a case where the hydrogen concentration corresponding to the equivalent plastic strain of each CAE analysis element was set in each CAE analysis element. (Case 2) is a case where a hydrogen concentration obtained by adding a hydrogen concentration corresponding to the hydrostatic stress calculated from the stress to a hydrogen concentration corresponding to the equivalent plastic strain of each CAE analysis element was set in each CAE analysis element. For each of (Case 1) and (Case 2), hydrogen diffusion analysis was performed based on the stress and hydrogen concentration calculated for each CAE analysis element of the press formed part 51, thereby calculating the hydrogen concentration distribution after hydrogen diffusion.

As a result of obtaining the hydrogen concentrations in the A part of the bent portion 53 from the hydrogen concentration distributions calculated for (Case 1) and (Case 2), the hydrogen concentrations were 2.5 ppm and 2.7 ppm before hydrogen diffusion, and were 4.0 ppm and 4.3 ppm after hydrogen diffusion, respectively.

Subsequently, similarly to Implementation Example 1 described above (refer to FIG. 19), the delayed fracture was determined using the stress and the equivalent plastic strain calculated for portion A of the bent portion 53, and the hydrogen concentration after hydrogen diffusion. FIG. 20 illustrates, as a result, the delayed fracture determination condition ($\sigma$=1020 MPa, dark solid line) at a bend R of 7 mm of the bent portion 53 and the hydrogen concentrations (★ in FIG. 20) of (Case 1) and (Case 2) after hydrogen diffusion analysis. Furthermore, FIG. 20 also illustrates, for comparison, delayed fracture determination conditions ($\sigma$=1120 MPa, shaded broken line) at a bend R of the bent portion 53 of Implementation Example 1 of 5 mm, and hydrogen concentrations (☆ in FIG. 20) of (Case 1) and (Case 2) after hydrogen diffusion analysis.

The delayed fracture determination condition at a bend R of 5 mm was a condition derived by a delayed fracture test using a uniaxial tensile test piece 27(FIG. 8, notch R=2.9 mm) in which a stress gradient (466 MPa/mm) corresponding to a stress gradient in a direction of crack propagation in the bent portion 53 of a bend R of 5 mm was imparted to the notch portion 29. Furthermore, the delayed fracture determination condition at a bend R of 7 mm was a condition derived by a delayed fracture test using a uniaxial tensile test piece 27(FIG. 8, notch R=3.2 mm) in which a stress gradient (424 MPa/mm) corresponding to a stress gradient in a direction of crack propagation in the bent portion 53 of a bend R of 5 mm was imparted to a notch portion 29. In the delayed fracture test in Implementation Example 2, similarly to Implementation Example 1, the uniaxial tensile test piece 27 was dipped in thiocyanic acid ammonium having a pH= 4.0 and a concentration of 0.1% and a McIlvaine buffer solution for a predetermined time under a hydrogen intrusion environment.

As illustrated in FIG. 20, by changing the bend R of the bent portion 53 from 5 mm to 7 mm, the delayed fracture determination condition was relaxed, and the hydrogen concentration after hydrogen diffusion analysis was also reduced. As a result, the hydrogen concentration (★ in FIG. 20) after the hydrogen diffusion analysis when the bend R of the bent portion 53 is 7 mm is lower than the hydrogen concentration under the delayed fracture determination condition ($\sigma$=1020 MPa) where the bend R is 7 mm in both (case 1) and (case 2). Therefore, it was predicted that delayed fracture would not occur in the bent portion 53 having the bend R of 7 mm. Accordingly, the temporary press forming condition in which the bend R of the bent portion 53 was changed to 7 mm was decided as the press forming condition. Furthermore, the press formed part 51 was press formed under the decided press forming conditions, and a delayed fracture test was performed. As a result, delayed fracture did not occur in the bent portion 53 of the press formed part 51.

As described above, with the method for manufacturing the press formed part according to the present invention, it has been demonstrated that it is possible to manufacture a press formed part having a countermeasure applied for suppressing occurrence of delayed fracture by determining press forming conditions under which delayed fracture does not occur in a high-tensile steel sheet and performing press forming under the decided press forming conditions.

Industrial Applicability

According to the present invention, it is possible to provide a method for predicting delayed fracture in a press formed part, a device for predicting delayed fracture in a press formed part, and a press formed part delayed fracture prediction program, provided to predict a portion where delayed fracture will occur in a press formed part that uses a high-tensile steel sheet. Furthermore, according to the present invention, it is possible to provide a method for manufacturing a press formed part in which press forming conditions are decided so as to suppress occurrence of delayed fracture at a portion where delayed fracture is predicted to occur by the above method, and a press formed part is manufactured under the decided press forming conditions.

Reference Signs List

| 1 | DELAYED FRACTURE PREDICTION DEVICE |
| 3 | STRESS DISTRIBUTION AND STRAIN DISTRIBUTION CALCULATION UNIT |
| 5 | STRESS GRADIENT CALCULATION UNIT |
| 7 | HYDROGEN CONCENTRATION DISTRIBUTION SETTING UNIT |
| 9 | HYDROGEN DIFFUSION ANALYSIS UNIT |
| 11 | DELAYED FRACTURE OCCURRENCE PREDICTION UNIT |
| 21 | UNIAXIAL TENSILE TEST PIECE |
| 23 | PARALLEL PORTION |
| 25 | ROUNDED PORTION |
| 27 | UNIAXIAL TENSILE TEST PIECE |
| 29 | NOTCH PORTION |
| 31 | FOUR-POINT BENDING TEST PIECE |
| 33a, 33b, 33c, 33d | FULCRUM |
| 35 | BENDING APEX PORTION |
| 41 | FOUR-POINT BENDING TEST JIG |
| 43 | SAMPLE STAGE |
| 45a, 45b, 45c, 45d | FULCRUM |
| 47 | SCREW |
| 51 | PRESS FORMED PART |
| 53 | BENT PORTION |
| 55 | PIECE PORTION |

**Claims**

1. A method for predicting delayed fracture in a press formed part, being the method for predicting a portion where delayed fracture will occur in the press formed part of a high-tensile steel sheet, the method comprising:

a stress distribution and strain distribution calculation step of calculating a stress distribution and a strain distribution in the press formed part;
a stress gradient calculation step of

specifying a portion having a high maximum principal stress in the press formed part as a delayed fracture portion-of-concern where delayed fracture is a matter of concern from the calculated stress distribution in the press formed part, and
calculating a stress gradient in a direction perpendicular to the maximum principal stress in the specified delayed fracture portion-of-concern as a stress gradient in a direction of crack propagation due to delayed fracture;

a hydrogen concentration distribution setting step of setting a hydrogen concentration distribution corresponding to the strain distribution in the press formed part calculated in the stress distribution and strain distribution calculation step, based on a relational expression between strain and hydrogen concentration acquired in advance for the high-tension steel sheet;
a hydrogen diffusion analysis step of

performing hydrogen diffusion analysis on the press formed part based on

the stress distribution calculated in the stress distribution and strain distribution calculation step and
the hydrogen concentration distribution set in the hydrogen concentration distribution setting step, and

calculating a hydrogen concentration distribution after hydrogen diffusion; and

a delayed fracture occurrence prediction step of

acquiring a delayed fracture determination condition representing a relationship between

a stress, a strain, and hydrogen concentration at a stress gradient corresponding to a stress gradient in the direction of crack propagation calculated for the delayed fracture portion-of-concern and delayed fracture occurrence, and

predicting whether delayed fracture will occur at the delayed fracture portion-of-concern based on

the acquired delayed fracture determination condition, and
stress, strain, and a hydrogen concentration after hydrogen diffusion at the delayed fracture portion-of-concern which are obtained from

the stress distribution and strain distribution calculated in the stress distribution and strain distribution calculation step and
the hydrogen concentration distribution after hydrogen diffusion calculated in the hydrogen diffusion analysis step.

2. The method for predicting delayed fracture in the press formed part according to claim 1, wherein the delayed fracture determination condition acquired in the delayed fracture occurrence prediction step is a condition obtained by a delayed fracture test in which a predetermined uniaxial tensile load is applied to a uniaxial tensile test piece in which a notch portion is formed in a parallel portion, and the uniaxial tensile test piece is held in a hydrogen intrusion environment in a state where a stress gradient corresponding to the stress gradient in the direction of crack propagation, calculated on the delayed fracture portion-of-concern, is imparted to the notch portion, so as to obtain a relationship between

the stress, strain, and hydrogen concentration in the notch portion to which the stress gradient is imparted, and
occurrence/non-occurrence of delayed fracture in the notch portion.

3. The method for predicting delayed fracture in the press formed part according to claim 1, wherein the delayed fracture determination condition acquired in the delayed fracture occurrence prediction step is a condition obtained by a delayed fracture test in which a predetermined bending load is applied to a four-point bending test piece, and the four-point bending test piece is held in a hydrogen intrusion environment in a state where a stress gradient corresponding to the stress gradient in the direction of crack propagation, calculated on the delayed fracture portion-of-concern, is imparted to a bent portion of the four-point bending test piece, so as to obtain a relationship between

the stress, strain, and hydrogen concentration in the bent portion to which the stress gradient is imparted, and
occurrence/non-occurrence of delayed fracture in the bent portion.

4. The method for predicting delayed fracture in the press formed part according to any one of claims 1 to 3, wherein

the stress distribution and strain distribution calculation step calculates an equivalent plastic strain distribution as the strain distribution, and
the hydrogen concentration distribution setting step acquires, in advance, a relational expression between the equivalent plastic strain and the hydrogen concentration, and sets a hydrogen concentration distribution corresponding to the equivalent plastic strain distribution based on the acquired relational expression between the equivalent plastic strain distribution and the hydrogen concentration.

5. The method for predicting delayed fracture in the press formed part according to any one of claims 1 to 4, wherein the high-tensile steel sheet has a tensile strength of 1 GPa or more.

6. A device for predicting delayed fracture in a press formed part, being the device that predicts a portion where delayed fracture will occur in the press formed part of a high-tensile steel sheet, the device comprising:

a stress distribution and strain distribution calculation unit that calculates a stress distribution and a strain distribution in the press formed part;
a stress gradient calculation unit that

specifies a portion having a high maximum principal stress in the press formed part as a delayed fracture portion-of-concern where delayed fracture is a matter of concern from the calculated stress distribution in the press formed part, and
calculates a stress gradient in a direction perpendicular to the maximum principal stress in the specified delayed fracture portion-of-concern as a stress gradient in a direction of crack propagation due to delayed fracture;

a hydrogen concentration distribution setting unit that sets a hydrogen concentration distribution corresponding to the strain distribution in the press formed part calculated by the stress distribution and strain distribution calculation unit, based on a relational expression between strain and hydrogen concentration acquired in advance for the high-tension steel sheet;
a hydrogen diffusion analysis unit that

performs hydrogen diffusion analysis on the press formed part based on

the stress distribution calculated by the stress distribution and strain distribution calculation unit and
the hydrogen concentration distribution set by the hydrogen concentration distribution setting unit, and

calculates a hydrogen concentration distribution after hydrogen diffusion; and

a delayed fracture occurrence prediction unit that

acquires a delayed fracture determination condition representing a relationship between

a stress, a strain, and hydrogen concentration at a stress gradient corresponding to a stress gradient in the direction of crack propagation calculated for the delayed fracture portion-of-concern and
delayed fracture occurrence, and

predicts whether delayed fracture will occur at the delayed fracture portion-of-concern based on

the acquired delayed fracture determination condition, and
stress, strain, and a hydrogen concentration after hydrogen diffusion at the delayed fracture portion-of-concern which are obtained from

the stress distribution and strain distribution calculated by the stress distribution and strain distribution calculation unit and
the hydrogen concentration distribution after hydrogen diffusion calculated by the hydrogen diffusion analysis unit.

7. The device for predicting delayed fracture in the press formed part according to claim 6, wherein

the stress distribution and strain distribution calculation unit calculates an equivalent plastic strain distribution as the strain distribution, and
the hydrogen concentration distribution setting unit acquires, in advance, a relational expression between the equivalent plastic strain and the hydrogen concentration, and sets a hydrogen concentration distribution corresponding to the equivalent plastic strain distribution based on the acquired relational expression between the equivalent plastic strain distribution and the hydrogen concentration.

8. A program for predicting delayed fracture in a press formed part, being the program that predicts a portion where delayed fracture will occur in the press formed part of a high-tensile steel sheet, the program causing a computer to function as units comprising:

a stress distribution and strain distribution calculation unit that calculates a stress distribution and a strain distribution in the press formed part;
a stress gradient calculation unit that

specifies a portion having a high maximum principal stress in the press formed part as a delayed fracture portion-of-concern where delayed fracture is a matter of concern from the calculated stress distribution in the press formed part, and
calculates a stress gradient in a direction perpendicular to the maximum principal stress in the specified delayed fracture portion-of-concern as a stress gradient in a direction of crack propagation due to delayed fracture;

a hydrogen concentration distribution setting unit that sets a hydrogen concentration distribution corresponding to the strain distribution in the press formed part calculated by the stress distribution and strain distribution calculation unit, based on a relational expression between strain and hydrogen concentration acquired in advance for the high-tension steel sheet;

a hydrogen diffusion analysis unit that

performs hydrogen diffusion analysis on the press formed part based on

the stress distribution calculated by the stress distribution and strain distribution calculation unit and the hydrogen concentration distribution set by the hydrogen concentration distribution setting unit, and

calculates a hydrogen concentration distribution after hydrogen diffusion; and

a delayed fracture occurrence prediction unit that

acquires a delayed fracture determination condition representing a relationship between

a stress, a strain, and hydrogen concentration at a stress gradient corresponding to a stress gradient in the direction of crack propagation calculated for the delayed fracture portion-of-concern and delayed fracture occurrence, and

predicts whether delayed fracture will occur at the delayed fracture portion-of-concern based on

the acquired delayed fracture determination condition, and
stress, strain, and a hydrogen concentration after hydrogen diffusion at the delayed fracture portion-of-concern which are obtained from

the stress distribution and strain distribution calculated by the stress distribution and strain distribution calculation unit and
the hydrogen concentration distribution after hydrogen diffusion calculated by the hydrogen diffusion analysis unit.

9. The program for predicting delayed fracture in the press formed part according to claim 8, wherein

the stress distribution and strain distribution calculation unit calculates an equivalent plastic strain distribution as the strain distribution, and
the hydrogen concentration distribution setting unit acquires, in advance, a relational expression between the equivalent plastic strain and the hydrogen concentration, and sets a hydrogen concentration distribution corresponding to the equivalent plastic strain distribution based on the acquired relational expression between the equivalent plastic strain distribution and the hydrogen concentration.

10. A method for manufacturing a press formed part, being the method for manufacturing the press formed part that uses a high-tensile steel sheet while suppressing occurrence of delayed fracture in the press formed part, the method comprising:

a temporary press forming condition setting step of setting a temporary press forming condition of the press formed part;
a delayed fracture occurrence/non-occurrence determination step of

predicting occurrence/non-occurrence of delayed fracture in the delayed fracture portion-of-concern specified for the press formed part by the method for predicting delayed fracture in the press formed part according to any one of claims 1 to 5, based on the temporary press forming condition, and
determining whether delayed fracture will occur in the press formed part based on a result of the prediction;

a temporary press forming condition change step of changing the temporary press forming condition when the delayed fracture occurrence/non-occurrence determination step has determined that the delayed fracture will occur in the press formed part;

a repeating step of repeatedly executing the temporary press forming condition change step and the delayed fracture occurrence/non-occurrence determination step until the delayed fracture occurrence/non-occurrence determination step decides that there is no occurrence of delayed fracture in the press formed part;

a press forming condition decision step of making a decision such that in case where the delayed fracture occurrence/non-occurrence determination step has determined that there is no occurrence of delayed fracture in the press formed part, the temporary press forming condition in this case is decided as a press forming condition; and

a press forming step of press forming the high-tensile steel sheet into the press formed part under the decided press forming condition.

# FIG.1

# FIG.2

(a) UNIAXIAL TENSILE TEST PIECE

(b) DELAYED FRACTURE OCCURRENCE PORTION

(c) HYDROGEN CONCENTRATION
DISTRIBUTION

BOUNDARY
BETWEEN
ROUNDED
PORTION AND
PARALLEL PORTION

HYDROGEN
CONCENT-
RATION

1.63ppm

0ppm

# FIG.3

$$C_\varepsilon = 0.52 \ln(\varepsilon_p^{eq}) + 3.9$$

(a) RELATIONSHIP BETWEEN
EQUIVALENT PLASTIC STRAIN AND
HYDROGEN CONCENTRATION

(b) RELATIONSHIP BETWEEN
STRAIN MODE AND
HYDROGEN CONCENTRATION

FIG.4

$$C_p = C_0 \exp\left(\frac{pV_H}{3RT}\right)$$

FIG.5

(a) DIPPING TIME: 30 hours

(b) DIPPING TIME: 20 hours

# FIG.6

# FIG.7

EP 4 752 522 A1

## FIG.8

## FIG.9

$$y = 1082.5e^{-0.293x}$$

31

FIG.10

# FIG.11

(a) BEFORE APPLICATION OF BENDING STRESS

(b) AFTER APPLICATION OF BENDING STRESS

(BENDING OUTER SIDE)

(BENDING INNER SIDE)

(c) FOUR-POINT BENDING TEST JIG

## FIG.12

$y = -1428.6x + 3412.7$

X-axis: SHEET THICKNESS (mm)
Y-axis: STRESS GRADIENT (MPa/mm)

## FIG.13

1

- STRESS DISTRIBUTION AND STRAIN DISTRIBUTION CALCULATION UNIT — 3
- STRESS GRADIENT CALCULATION UNIT — 5
- HYDROGEN CONCENTRATION DISTRIBUTION SETTING UNIT — 7
- HYDROGEN DIFFUSION ANALYSIS UNIT — 9
- DELAYED FRACTURE OCCURRENCE PREDICTION UNIT — 11

# FIG.14

```
                    ┌─────────┐
                    │  START  │
                    └─────────┘
                         │
        ┌────────────────────────────────────┐
        │ TEMPORARY PRESS FORMING CONDITION   │── S21
        │           SETTING STEP              │
        └────────────────────────────────────┘
```

S27 REPEATING STEP

DELAYED FRACTURE OCCURRENCE/ NON-OCCURRENCE DETERMINATION STEP — S23

STRESS DISTRIBUTION AND STRAIN DISTRIBUTION CALCULATION STEP — S1

STRESS GRADIENT CALCULATION STEP — S3

HYDROGEN CONCENTRATION DISTRIBUTION SETTING STEP — S5

HYDROGEN DIFFUSION ANALYSIS STEP — S7

DELAYED FRACTURE OCCURRENCE PREDICTION STEP — S9

OCCURRENCE OF DELAYED FRACTURE? — S23a

YES

NO

TEMPORARY PRESS FORMING CONDITION CHANGE STEP — S25

PRESS FORMING CONDITION DECISION STEP — S29

PRESS FORMING STEP — S31

END

# FIG.15

51  R=5mm  55  53

55  18mm  R  53  55  18mm

(a) PERSPECTIVE VIEW          (b) CROSS-SECTIONAL VIEW

## FIG.16

(a) LONGITUDINAL DIRECTION STRESS DISTRIBUTION

(b) EQUIVALENT PLASTIC STRAIN DISTRIBUTION

# FIG.17

(a) HYDROGEN CONCENTRATION DISTRIBUTION
BEFORE HYDROGEN DIFFUSION
(HYDROGEN CONCENTRATION DISTRIBUTION CORRESPONDING
TO EQUIVALENT PLASTIC STRAIN, CASE 1)

(b) HYDROGEN CONCENTRATION DISTRIBUTION
BEFORE HYDROGEN DIFFUSION
(HYDROGEN CONCENTRATION DISTRIBUTION CORRESPONDING
TO HYDROSTATIC STRESS)

(c) HYDROGEN CONCENTRATION DISTRIBUTION
BEFORE HYDROGEN DIFFUSION
(HYDROGEN CONCENTRATION DISTRIBUTION CORRESPONDING
TO HYDROSTATIC STRESS AND
EQUIVALENT PLASTIC STRAIN, CASE 2)

# FIG.18

(a) HYDROGEN CONCENTRATION DISTRIBUTION
AFTER HYDROGEN DIFFUSION
(HYDROGEN CONCENTRATION DISTRIBUTION CORRESPONDING
TO EQUIVALENT PLASTIC STRAIN, CASE 1)

(b) HYDROGEN CONCENTRATION DISTRIBUTION
AFTER HYDROGEN DIFFUSION
(HYDROGEN CONCENTRATION DISTRIBUTION CORRESPONDING
TO HYDROSTATIC STRESS AND
EQUIVALENT PLASTIC STRAIN, CASE 2)

# FIG.19

(a) DELAYED FRACTURE PORTION-OF-CONCERN

51

53

53

PORTION A (SHEET THICKNESS CENTER PORTION)

PORTION B (SURFACE)

(b) PREDICTION OF DELAYED FRACTURE

(b-1) CASE 1

σ=1120MPa    980MPa    900MPa

5.0

★A

★B

HYDROGEN CONCENTRATION (ppm)

☆A

HYDROGEN DIFFUSION

☆B

0.0

0.0                                    0.2

EQUIVALENT PLASTIC STRAIN (-)

DELAYED FRACTURE DETERMINATION CONDITION FOR PORTION B
(STRESS: 980MPa
STRESS GRADIENT: 466MPa/mm)

DELAYED FRACTURE DETERMINATION CONDITION FOR PORTION A
(STRESS: 1120MPa
STRESS GRADIENT: 466MPa/mm)

(b-2) CASE 2

σ=1120MPa    980MPa    900MPa

5.0

★A

★B

HYDROGEN CONCENTRATION (ppm)

☆A

HYDROGEN DIFFUSION

☆B

0.0

0.0                                    0.2

EQUIVALENT PLASTIC STRAIN (-)

DELAYED FRACTURE DETERMINATION CONDITION FOR PORTION B
(STRESS: 980MPa
STRESS GRADIENT: 466MPa/mm)

DELAYED FRACTURE DETERMINATION CONDITION FOR PORTION A
(STRESS: 1120MPa
STRESS GRADIENT: 466MPa/mm)

FIG.20

## INTERNATIONAL SEARCH REPORT

| International application No. |
| --- |
| **PCT/JP2024/022943** |

### A. CLASSIFICATION OF SUBJECT MATTER

*G01N 3/00*(2006.01)i; *B21D 22/00*(2006.01)i; *G01N 17/00*(2006.01)i
FI:   G01N3/00 Z; B21D22/00; G01N17/00

According to International Patent Classification (IPC) or to both national classification and IPC

### B. FIELDS SEARCHED

Minimum documentation searched (classification system followed by classification symbols)

G01N3/00; B21D22/00; G01N17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/118497 A1 (JFE STEEL CORPORATION) 09 June 2022 (2022-06-09) | 1-10 |
| A | JP 2019-174282 A (KABUSHIKI KAISHA KOBE SEIKO SHO) 10 October 2019 (2019-10-10) | 1-10 |
| A | JP 2016-057163 A (NIPPON STEEL & SUMITOMO METAL CORPORATION) 21 April 2016 (2016-04-21) | 1-10 |
| A | CN 111307612 A (CHINA AUTOMOTIVE ENGINEERING RESEARCH INSTITUTE CO., LTD.) 19 June 2020 (2020-06-19) | 1-10 |

☐ Further documents are listed in the continuation of Box C.      ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **06 August 2024** | **20 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/022943** |

| Patent document cited in search report | | | Publication date (day/month/year) | Patent family member(s) | | | Publication date (day/month/year) |
|---|---|---|---|---|---|---|---|
| WO | 2022/118497 | A1 | 09 June 2022 | JP | 7004126 | B1 | |
| | | | | US | 2024/0044760 | A1 | |
| | | | | EP | 4239313 | A1 | |
| | | | | CN | 116635706 | A | |
| | | | | KR | 10-2023-0098835 | A | |
| | | | | MX | 2023006450 | A | |
| JP | 2019-174282 | A | 10 October 2019 | (Family: none) | | | |
| JP | 2016-057163 | A | 21 April 2016 | (Family: none) | | | |
| CN | 111307612 | A | 19 June 2020 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019174124 A
- JP 2020041838 A
- JP 2011033600 A
- JP 2017179589 A

**Non-patent literature cited in the description**

- **AKINOBU ISHIWATARI** ; **MASAKI URABE** ; **TORU INAZUMI**. Press Forming Analysis Contributing to the Expansion of High Strength Steel Sheet Applications. *JFE Steel Technical Report*, August 2012, vol. 30, 19-24